(19)

Europäisches Patentamt
European Patent Office
Office européen des brevets

(11)   **EP 4 250 110 A1**

(12)   **EUROPEAN PATENT APPLICATION**
published in accordance with Art. 153(4) EPC

(43) Date of publication:
    **27.09.2023   Bulletin 2023/39**

(21) Application number: **20962380.0**

(22) Date of filing: **17.11.2020**

(51) International Patent Classification (IPC):
    **G06F 9/50** (2006.01)

(52) Cooperative Patent Classification (CPC):
    **G06F 9/50**

(86) International application number:
    **PCT/JP2020/042832**

(87) International publication number:
    **WO 2022/107216 (27.05.2022 Gazette 2022/21)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **FUJITSU LIMITED
    Kawasaki-shi, Kanagawa 211-8588 (JP)**

(72) Inventors:
    • **YAMAOKA, Mebae
      Kawasaki-shi, Kanagawa 211-8588 (JP)**
    • **MORINAGA, Masanobu
      Kawasaki-shi, Kanagawa 211-8588 (JP)**

(74) Representative: **Hoffmann Eitle
    Patent- und Rechtsanwälte PartmbB
    Arabellastraße 30
    81925 München (DE)**

(54)   **TRANSACTION CONTROL METHOD, TRANSACTION CONTROL PROGRAM, AND INFORMATION PROCESSING DEVICE**

(57)     A method for transaction control includes: at a computer performing transaction control including receiving a plurality of transaction generated in a plurality of blockchain networks (11) and transmitting the plurality of transactions to one or more blockchain networks (11) corresponding to respective destinations of the plurality of transactions. The transaction control includes controlling, based on an execution cost to execute a transaction in each of the plurality of blockchain networks (11) and a blockchain network (11) generating a first transaction having at least one of a transmission source and a transmission destination being a concealing target among the plurality of blockchain networks, a number of second transactions to be generated by each of the plurality of blockchain networks (11) to conceal the first transaction.

FIG.4

**Description**

TECHNICAL FIELD

The present invention relates to a method for transaction control, a transaction control program, and an information processing apparatus.

BACKGROUND ART

In recent years, various token economies using blockchains (BCs) have been launched. In addition, a technique of a cross chain that can make transactions across multiple BCs is known. As one form of a cross chain, a connection chain (CC) that connects multiple blockchains with a blockchain exists.

A BC is sometimes operated so that a third party can access a ledger. In such cases, personal privacy-related information "who used what service", e.g., information regarding a relationship between a remittance source and a remittance destination of a transaction, may be known to a third party.

As a first scheme of concealing the relationship between a remittance source and a remittance destination of a transaction from a third party, in other words, suppressing a transaction of a concealing target from being identified, mixing is known in which multiple transactions are aggregated into a servicer called a tumbler. However, in mixing, since a transaction is caused to wait for undergoing the mixing in a CC serving as a tumbler, execution delay of the transaction may occur.

Further, as a second scheme, a scheme is known which suppresses occurrence of an execution delay of a transaction by recruiting participants to the mixing, not waiting for a transaction for mixing to occur spontaneously as in the first scheme.

CITATION LIST

PATENT DOCUMENT

[Patent Document 1] Japanese Laid-open Patent Publication No. 2019-053712

SUMMARY OF THE INVENTION

PROBLEMS TO BE SOLVED BY THE INVENTION

In the second scheme, in order to perform mixing on a first transaction which is a concealing target, a CC will generate a second transaction for concealing the first transaction.

As the above, the second scheme, which generates the second transaction that does not need to be originally generated, may cause an increase in an execution cost for executing the first transaction of concealing target as compared with the first scheme. An example of the execution cost is the cost (commission) for executing transactions in a BC. In addition to or in place of the cost, the execution cost may include a processing load, a network load, and the like of a BC, a CC, or both.

In one aspect, the object of the present invention is to reduce an execution cost of second transactions for concealing a first transaction of a concealing target.

MEANS TO SOLVE THE PROBLEM

As one aspect, a method for transaction control may cause a computer to execute the following process. The process may include performing transaction control including receiving a plurality of transaction generated in a plurality of blockchain networks and transmitting the plurality of transactions to one or more blockchain networks corresponding to respective destinations of the plurality of transactions, and the transaction control may include controlling, based on an execution cost to execute a transaction in each of the plurality of blockchain networks and a blockchain network generating a first transaction having at least one of a transmission source and a transmission destination being a concealing target among the plurality of blockchain networks, a number of second transactions to be generated by each of the plurality of blockchain networks to conceal the first transaction.

EFFECT OF THE INVENTION

As one aspect, the present invention can reduce an execution cost of a second transaction for concealing a first transaction of a concealing target.

BRIEF DESCRIPTION OF DRAWINGS

FIG. 1 is a diagram illustrating an example of a blockchain connecting network;
FIG. 2 is a diagram for explaining an example of a first scheme;
FIG. 3 is a diagram for explaining an example of an operation of a system according to one embodiment;
FIG. 4 is a block diagram illustrating an example of a functional configuration of the system of the one embodiment;
FIG. 5 is a diagram illustrating an example of a data structure of genuine transaction information;
FIG. 6 is a diagram illustrating an example of a data structure of mixing helper information of each BC;
FIG. 7 is a diagram illustrating an example of execution cost information;
FIG. 8 is a diagram for explaining an example of a process performed by a transaction number determining unit;
FIG. 9 is a diagram for explaining an example of a calculating process of a transaction number of each BC;
FIG. 10 is a diagram illustrating an example of calculation of a transaction number of each BC in the calculating process of the one embodiment;
FIG. 11 is a diagram illustrating an example of comparison between an execution cost of fake transactions by a scheme according to the one embodiment and an execution cost of fake transactions when a second comparative example is applied;
FIG. 12 is a diagram illustrating an example of a data structure of request information;
FIG. 13 is a flow diagram for explaining an example of an operation of a determining process of a transaction number in a CC;
FIG. 14 is a flow diagram for explaining an example of an operation of a requesting process of generating a transaction in the CC;
FIG. 15 is a diagram illustrating an example of comparison between an execution cost of fake transactions by a scheme according to the one embodiment and an execution cost of fake transactions when a second comparative example is applied;
FIG. 16 is a block diagram illustrating an example of a functional configuration of a system according to a first modification;
FIG. 17 is a diagram illustrating an example of a data structure of a genuine transaction demanding history;
FIG. 18 is a diagram for explaining an example of a selecting process for a generating method by a generating method selecting unit;
FIG. 19 is a flow diagram for explaining an example of an operation of a selecting process for a generating method in a CC;
FIG. 20 is a flow diagram for explaining an example of an operation of a requesting process of generating a transaction in the CC;
FIG. 21 is a block diagram illustrating an example of a functional configuration of a system according to a second modification;
FIG. 22 is a diagram illustrating an example of a data structure of an overall transaction history;
FIG. 23 is a diagram for explaining an example of a selecting process for a generating method by a generating method selecting unit;
FIG. 24 is a diagram for explaining an example of a selecting process for a generating method by a generating method selecting unit;
FIG. 25 is a flow diagram for explaining an example of an operation of a selecting process for a generating method in a CC; and
FIG. 26 is a block diagram illustrating an example of a hardware (HW) configuration of a computer that achieves the function of a CC.

DESCRIPTION OF EMBODIMENT(S)

Hereinafter, an embodiment of the present invention will now be described with reference to the drawings. However, the embodiment described below is merely illustrative and there is no intention to exclude the application of various modifications and techniques that are not explicitly described in the embodiment. For example, the present embodiment can be variously modified and implemented without departing from the scope thereof. In the drawings used in the following description, the same reference numerals denote the same or similar parts unless otherwise specified.

(1) First Embodiment:

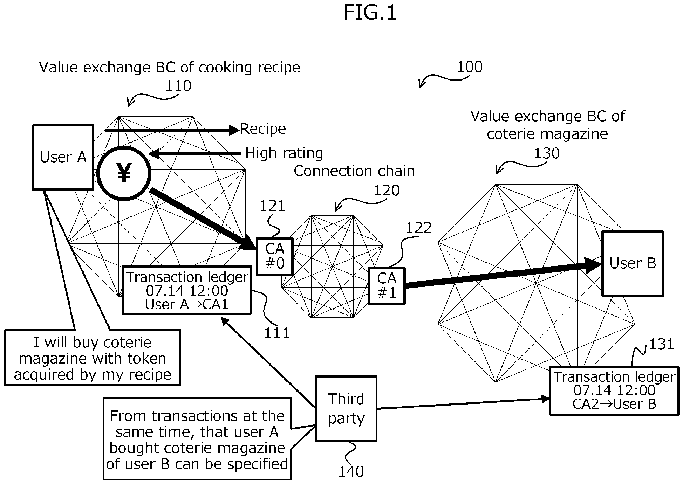

FIG. 1 is a diagram illustrating an example of a blockchain connecting network 100. The example of FIG. 1 assumes that a user A of a cooking recipe exchange BC 110 purchases, using a token stored in the BC 110, a commodity of a user B of a value exchange BC 130 of a coterie magazine through a CC 120.

In response to a request from the user A, the CC 120 transfers one or more tokens of the user A to the primary account CA 121 (CA#0) of the CC 120 on the BC 110. Then, the CC 120 transfers tokens equivalent to the tokens transferred to the CA 121 to the primary account CA 122 (CA#1) of the CC 120 on the BC 130 and transfers the tokens from the CA 122 to the account of the user B.

In the example of FIG. 1, a transaction record such as "2020.07.14 12:00, user A→CA#0" is set in a transaction ledger 111 on the BC 110, and a transaction record such as "2020.07.14 12:00, CA#1→user B" is set in a transaction ledger 131 on the BC 130.

Here, a BC is sometimes operated so that a third party can access a ledger. Examples of such a circumstance include cases where a public chain is used and cases where a consortium chain is used and a third party is allowed to access a ledger for the purpose of evaluating each other on the basis of the transaction records.

If a third party can access a ledger, personal privacy-related information "who used what service" comes to be known to the third party through a single BC or multiple BCs via a CC.

In the example of FIG. 1, these transaction records do not appear to have a credit transfer from the user A to the user B. However, a third party who can browse both transaction ledgers 111 and 131 of the BCs 110 and 130 and knows that CA#0 and CA#1 are the primary accounts of the CC 120 can link two records based on the transaction time or the like.

This allows a third party to know information regarding a relationship between a remittance source and a remittance destination of a transaction that indicates that the user A uses the service of the user B, in other words, personal privacy-related information.

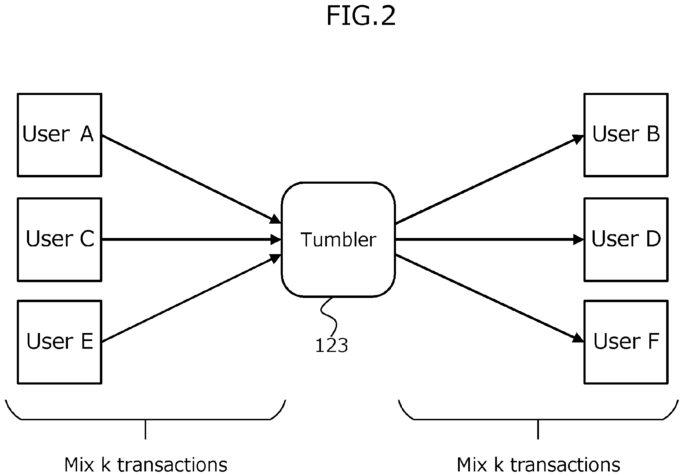

FIG. 2 is a diagram for explaining an example of the above-described first scheme and illustrates an example of a case where the CC 120 illustrated in FIG. 1 has a function of a tumbler 123 that executes mixing. As illustrated in FIG. 2, the tumbler 123 mixes k transactions (k is an integer of two or more) of users A, C, and E of the BC 110 as a transmission source and also mixes k transactions of users B, D, and F of the BC 130 as a transmission destination. However, since a transaction is caused to wait for undergoing the mixing in the tumbler 123, execution delay of the transaction may occur.

In order to solve the inconvenience caused by the first scheme, it is conceivable that the tumbler 123 generates a second transaction for concealing a first transaction of a concealing target, thereby performing mixing of the first transaction by means of the above-described second scheme. However, generating an originally dispensable second transaction, the second scheme may cause an increase in the total execution cost to be generated to execute the first transaction of a concealing target as compared to the first scheme.

As a solution to the above, one embodiment describes, for example, a scheme of reducing the execution cost of one or more transactions additionally generated for the purpose of mixing in a CC connecting multiple BCs in contrast to the second scheme.

Note that, the one embodiment assumes, unlike a transaction on a single BC, a service that performs mixing of transactions across a CC that connects multiple BCs.

The one embodiment further assumes that an execution cost occurs for each transaction, that the transaction execution costs vary among BCs, and that the execution cost of each BC is published. The publication of the execution costs may be obtained, for example, in a CC.

In the following description, a transaction of a concealing target to be executed may sometimes be referred to as a "genuine transaction". A genuine transaction is an example of the first transaction. An example of a transaction of a concealing target is a transaction that conceals information on the transmitter/receiver, such as the remittance sender/receiver, from a third party. The transmitter/receiver may be, for example, a transmission source or a transmission destination of a transaction, or both, and is an example of the information regarding a relationship between a transmission source and a transmission destination of a transaction. An example of the remittance sender/receiver may be a remittance source or a remittance destination of a transaction, or both.

In the following description, one or more transactions generated by a tumbler by, for example, recruiting participants for the purpose of concealing the transmitter/receiver (remittance sender/receiver) of a genuine transaction may sometimes be referred to as "fake transactions" . A fake transaction is an example of the second transaction. A fake transaction may also be referred to as a "dummy transaction."

(1-1) Comparative Example:

Here, a comparative example for reducing the execution cost of fake transactions, which are originally dispensable, under the above conditions will now be described.

As a first comparative example, a scheme of generating a fake transaction in a BC having the smallest execution cost is conceivable. However, in the first comparative example, all fake transactions are outputted from one BC that runs with the smallest execution cost. For the above, a genuine transaction can be identified by a third party unless the remittance source of the genuine transaction is the remittance sender on the same BC as that of the remittance source of the fake transaction. Consequently, the remittance sender/receiver of the genuine transaction is not concealed to make it difficult to successfully protect the personal privacy-related information on a genuine transaction.

As a second comparative example, a scheme of generating all fake transactions on the same BC as that of the remittance sender of a genuine transaction is conceivable. However, in the second comparative example, the cost of each fake transaction becomes higher as the execution cost of the BC that remits the genuine transaction is higher (cost).

(1-2) Description of One Embodiment:

With the above-described disadvantages described in the first and second comparative examples in view, the one embodiment exemplarily describes a method for reducing the execution cost of the second transactions while ensuring concealment of the first transaction by suppressing the first transaction from being uniquely identified.

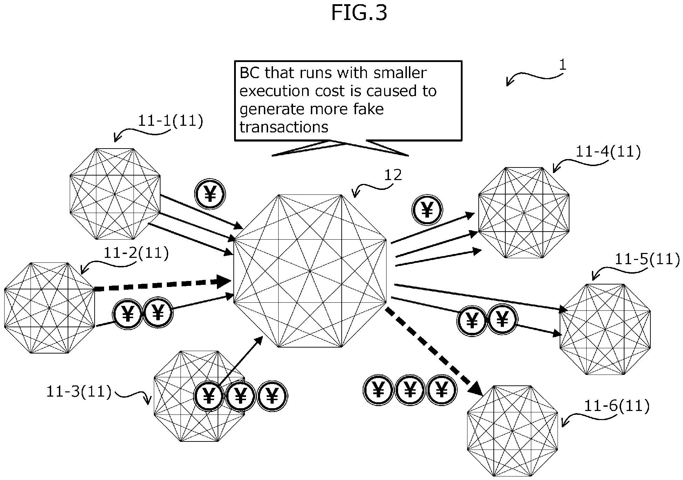

FIG. 3 is a diagram for explaining an example of an operation of a system 1 according to the one embodiment. An example of the system 1 includes a blockchain connecting network. As illustrated in FIG. 3, the system 1 may illustratively include multiple (six in FIG. 3) blockchains (BCs) 11-1 to 11-6 and a connection chain (CC) 12. Hereinafter, when not discriminating from each other, the BCs 11-1 to 11-6 are each simply referred to as a BC 11.

Each of the BCs 11-1 to 11-6 is an example of a blockchain network in which an execution cost is generated for each transaction, and the execution costs thereof are assumed to be published. In addition, the execution costs of the transactions in the respective BCs 11-1 to 11-6 may be set independently of one another, in other words, may be different from one another.

Each BC 11 may be a transmission source, a transmission destination of a transaction, or both. For convenience, the example of FIG. 3 assumes that the BCs 11-1 to 11-3 are BCs serving as the transmission sources of transactions and the BCs 11-4 to 11-6 are BCs serving as the transmission destinations of the transmissions. Hereinafter, a BC serving as a transmission source may sometimes be referred to as a "transmission source BC", and a BC serving as a transmission destination may sometimes be referred to as a "transmission destination BC". In addition, a BC serving as a remittance source, which is an example of the transmission source BC, may sometimes be referred to as a "remittance source BC", and a BC serving as a remittance destination, which is an example of the transmission destination BC, may sometimes be referred to as a "remittance destination BC".

The CC 12 is a network that connects multiple BCs 11 and may provide a service to perform mixing on transactions communicated among the BCs 11, for example. The CC 12 may obtain an execution cost of a transaction in each of the multiple BCs 11.

As illustrated in FIG. 3, the CC 12 of the one embodiment may cause a BC 11 that runs with a smaller execution cost to generate more fake transactions, for example. For example, the CC 12 may cause the BCs 11 to generate k-1 fake transactions in k transactions appeared to be mixed from a third party, such that the BC 11 that runs with a smaller execution cost generates more fake transactions . The symbol k is an example of a first privacy parameter indicating the number of transactions to be mixed, and may be determined in advance by, for example, an administrator and set in the CC 12. The example of FIG. 3 assumes k=6.

As illustrated in FIG. 3, the transmission source BC 11-1 has the lowest execution cost among the transmission source BCs 11-1 to 11-3, and the transmission source BC 11-3 has the highest execution cost among the transmission source BCs 11-1 to 11-3. In addition, the transmission destination BC 11-4 has the lowest execution cost among the transmission destination BCs 11-4 to 11-6, and the transmission destination BC 11-6 has the highest execution cost among the transmission destination BCs 11-4 to 11-6.

In this case, since the BC 11-1 generates three transactions, the BC 11-2 generates two transactions, and the BC 11-3 generates one transaction, the transmission source BCs 11 generate six (k) transactions in total. One of these six transactions is the genuine transaction and the remaining five (k-1) are the fake transactions. The six transactions are mixed in the CC 12 and sent to the respective transmission destination BCs 11-4 to 11-6 of the transactions.

In the transmission destination BCs 11, among the total six (k) transactions including one genuine transaction and five (k-1) fake transactions, three transactions are transmitted to the BC 11-4, two transactions are transmitted to the BC 11-5, and one transaction is transmitted to the BC 11-6.

In this way, in the system 1 according to the one embodiment, the CC 12 causes all the BCs 11 that can be targets of mixing service to generate transactions. This can cause the BC 11 that runs with a smaller execution cost to generate more fake transactions while inhibiting the genuine transaction from being uniquely identified, so that the execution cost of transactions can be reduced.

As another aspect, regardless of which BC 11 generates the genuine transaction, the total execution cost of the genuine transaction and the accompanied fake transactions generated in the system 1 (multiple BCs 11) can be kept constant or substantially constant. In other words, in the system 1 (CC 12), it is possible to equalize, among the BCs 11, the unevenness in the total execution cost caused by a difference in the BCs 11 of a user that issues the genuine transaction. Therefore, when operating a service to conceal a genuine transaction at a constant or substantially constant providing fee, this method can ensure fairness among users belonging to different BCs 11 and validity of the providing fee.

(1-3) Example of Functional Configuration of One Embodiment:

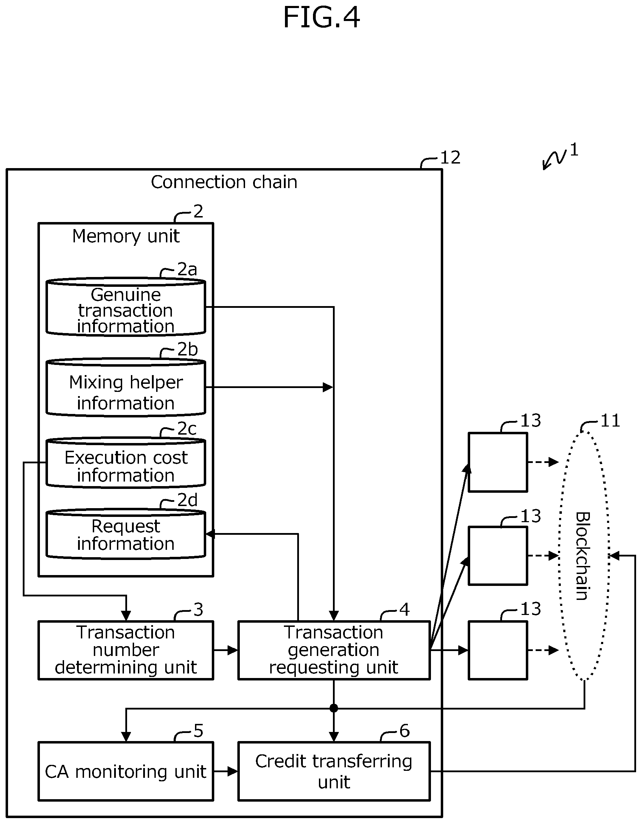

FIG. 4 is a block diagram illustrating an example of a functional configuration of the system 1 according to the one embodiment. As illustrated in FIG. 4, the CC 12 may be communicably connected to multiple (three in the example of FIG. 4) terminal devices 13 and multiple (one in the example of FIG. 4) BCs 11. Each terminal device 13 is an example of a computer used by an applicant or a mixing helper of a genuine transaction. Although the example of FIG. 4 connects three terminal devices 13 to one BC 11, the system 1 may practically include additional multiple terminal devices 13, and additional one or more BCs 11.

As illustrated in FIG. 4, the CC 12 may illustratively include a memory unit 2, a transaction number determining unit 3, a transaction generation requesting unit 4, a connection chain account (CA; CC Account) monitoring unit 5, and a credit transferring unit 6. The transaction number determining unit 3, the transaction generation requesting unit 4, the CA monitoring unit 5, and the credit transferring unit 6 are collectively an example of a controlling unit, and at least one of them may be at least part of a function of the tumbler that executes transaction control that receives transactions transmitted from the multiple BCs 11 and transmits the transactions to respective multiple BCs 11 as the destinations of the transactions.

The memory unit 2 has a storing region that stores various data used by the CC 12. The memory unit 2 may illustratively store genuine transaction information 2a, mixing helper information 2b, execution cost information 2c, and request information 2d.

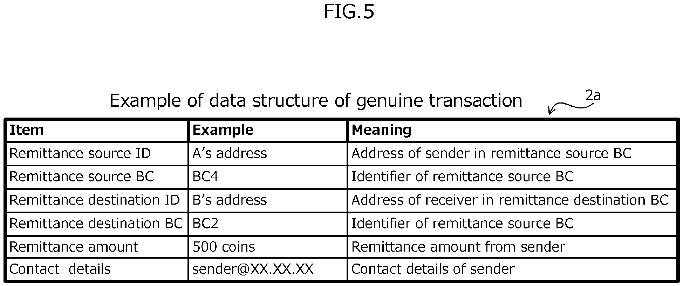

FIG. 5 is a diagram illustrating an example of a data structure of the genuine transaction information 2a. A genuine transaction is, for example, a transaction of a concealing target issued to a predetermined reception (e.g., address) in the CC 12. The CC 12 may store, into the memory unit 2, information on a transaction received at the predetermined reception as the genuine transaction information 2a.

As illustrated in FIG. 5, the genuine transaction information 2a may exemplarily include items of a "remittance source ID (Identifier) ", a "remittance source BC", a "remittance destination ID", a "remittance destination BC", a "remittance amount", and "contact details".

The "remittance source ID" is an example of identification information on the remittance sender (e.g., "User A"), and may be, for example, the address of a remittance sender in the remittance source BC 11. As one example, "A's address" may be set in the "remittance source ID".

The "remittance source BC" is an example of identification information on the remittance source BC 11, and for example, an identifier such as "BC4" may be set.

The "remittance destination ID" is an example of identification information on a receiver (e.g., "User B"), and may be, for example, the address of the receiver in the remittance destination BC 11. As an example, "B's address" may be set in the "remittance destination ID".

The "remittance destination BC" is an example of identification information on the remittance destination BC 11, and for example, an identifier such as "BC2" may be set.

The "remittance amount" is a remittance amount from the remittance sender, and for example, the amount of a virtual currency such as "500 coins" may be set.

The "contact details" is contact details of the remittance sender, and for example, an e-mail address such as "sender@XX.XX.XX" may be set.

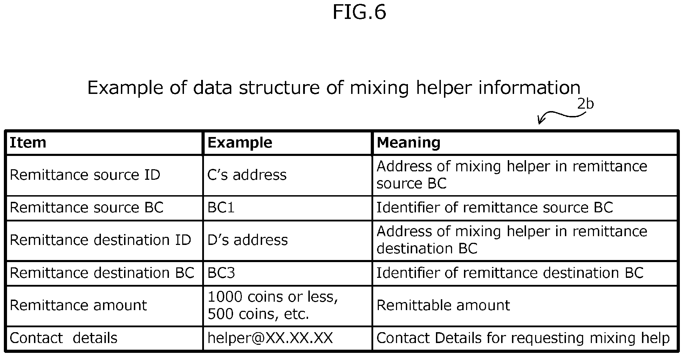

FIG. 6 is a diagram illustrating an example of a data structure of the mixing helper information 2b of each BC 11. The mixing helper is a user of a BC 11 who is registered as a helper that generates the second transactions for concealing the first transaction in order to perform mixing for the first transaction of the concealing target.

As illustrated in FIG. 6, the mixing helper information 2b may exemplarily include items of a "remittance source ID", a "remittance source BC", a "remittance destination ID", a "remittance destination BC", a "remittance amount", and "contact details".

The "remittance source ID" is an example of identification information on a mixing helper (e.g., "User C") and may be, for example, the address of the mixing helper in the remittance source BC 11. As one example, "C's address" may be set in the "remittance source ID".

The "remittance source BC" is an example of identification information on the remittance source BC 11, and for example, an identifier such as "BC1" may be set.

The "remittance destination ID" is an example of identification information on a mixing helper (e.g., "User D") and may be, for example, the address of the mixing helper in the remittance destination BC 11. As one example, "D's address" may be set in the "remittance destination ID".

The "remittance destination BC" is an example of identification information on the remittance destination BC 11, and for example, an identifier such as "BC3" may be set.

The "remittance amount" is a remittable amount by the mixing helper, and for example, a threshold, a range, or a fixed money amount such as "1000 coins or less" or "500 coins" may be set.

The "contact details" are contact details for requesting mixing help to the mixing helper, and for example, an e-mail address such as "helper@XX.XX.XX" may be set.

The mixing helper may be registered in the mixing helper information 2b so as to transfer money to the addresses of two BCs 11 that a single helper possesses. This registration is only allowed if the addresses on the two BCs 11 are not associated with a single mixing helper.

In addition, even if a user possesses only an address of the remittance source BC 11 among the remittance source and the remittance destination, the user may be registerable as a mixing helper in such a manner that the user can help mixing passingly due to an occurrence of a scheduled remittance to the remittance destination BC 11.

In order to deal with the above-described manner, for example, as illustrated in FIG. 6, "1000 coins or less", which represents the overall credit of the mixing helper on the remittance source BC 11, may be set for the remittance amount in the mixing helper information 2b. Alternatively, a fixed amount, such as the amount "500 coins", that the mixing helper is going to transfer may be set to the remittance amount in the mixing helper information 2b.

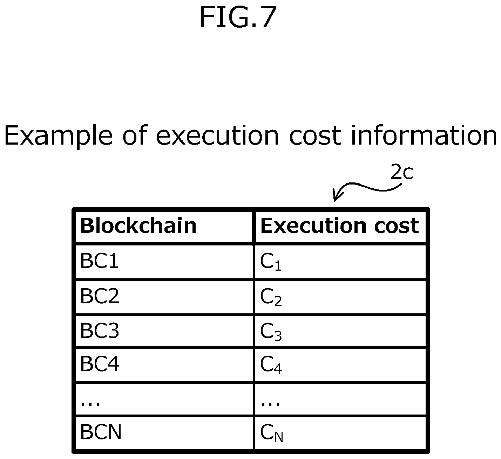

FIG. 7 is a diagram illustrating an example of the execution cost information 2c. The execution cost information 2c is information indicating an execution cost of a transaction in each BC 11 that the CC 12 obtains from the BC 11.

As illustrated in FIG. 7, the execution cost information 2c may illustratively include items of a "blockchain" and an "execution cost".

The "blockchain" may be identification information on each BC 11, for example, an identifier such as "BC1".

The "execution cost" is the relative execution cost of each BC 11. The "execution cost" may be determined, for example, on the basis of a virtual currency on the CC 12 based on the exchange rate of the value on the respective BCs 11. In the example of FIG. 7, "coin" is assumed to be used as a unit of the virtual currency. In addition to or in place of the above-described fee (cost), the execution cost may include a processing load, a network load, and the like of the BC 11, the CC 12 or both.

The execution cost information 2c illustrated in FIG. 7 is assumed to be a list in which the BCs 11 are sorted in the ascending order of the execution cost for convenience. For example, in the execution cost information 2c, the execution cost "$C_1$" of the "BC1" is assumed to be the smallest, and the execution cost "$C_N$" of the "BCN" is assumed to be the largest. The symbol N represents the number of the BCs 11 included in the system 1, and is exemplified by the number of the BCs 11 serving as the targets of mixing by the CC 12.

The request information 2d will be described below.

Returning to the description of FIG. 4, the transaction number determining unit 3 performs a process of determining the number of transactions to be generated in each BC 11 for mixing based on the execution cost of each BC 11 and the privacy parameter k. For example, the transaction number determining unit 3 may determine the number of transactions to be generated in each BC 11 such that the relationship between the execution cost of each BC 11 and the number of transactions to be generated on the BC 11 follows a predetermined function, e. g. , a predetermined decreasing function.

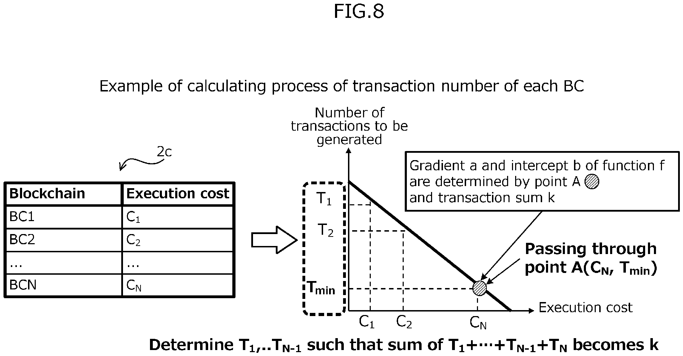

FIG. 8 is a diagram for explaining an example of a process performed by the transaction number determining unit 3. As illustrated in FIG. 8, the transaction number determining unit 3 determines the numbers "$T_1$" to "$T_{N-1}$" of transactions of the respective BCs 11 such that the sum of the transaction numbers becomes k. Here, "$T_N$" is the minimum (least) transaction number "$T_{min}$" to be generated in the BC 11 that runs with the largest execution cost, and may be a predetermined value.

For example, as the transaction number "$T_{min}$" comes closer to a value k/N, transactions are generated more evenly at the BCs 11 and the higher privacy is guaranteed for a genuine transaction, but instead, the amount of reduction of the execution cost declines. Therefore, the transaction number "$T_{min}$" can be regarded as an example of a second privacy parameter for adjusting the trade-off between the concealment effect of the genuine transaction and the reduction effect of the execution cost.

For example, the transaction number determining unit 3 may obtain a point A at which the execution cost of the BC 11 having the largest execution cost, which corresponds to the execution cost "$C_N$" of the "BCN" in the example of FIG. 8, and the minimum transaction number "$T_{min}$" intersects in the two-dimensional space in terms of the number of transactions to be generated and the execution cost. The transaction number determining unit 3 may also obtain the intercept b and the gradient a of a monotonically decreasing function $f(x)=ax+b$ that takes the point A and also makes the sum of the transaction numbers "$T_1$" to "$T_N$" ("$T_{min}$") equal to the privacy parameter k. Then, the transaction number determining unit 3 may calculate the transaction numbers "$T_1$" to "$T_{N-1}$" to be generated in the "BC1" to "BCN-1", respectively, by substituting the execution costs "$C_1$" to "$C_{N-1}$" of the "BC1" to the "BCN-1" into the variable x based on the monotonically decreasing function f(x).

The calculating process of the transaction number of each BC 11 may include, for example, the following processes of (i) and (ii).

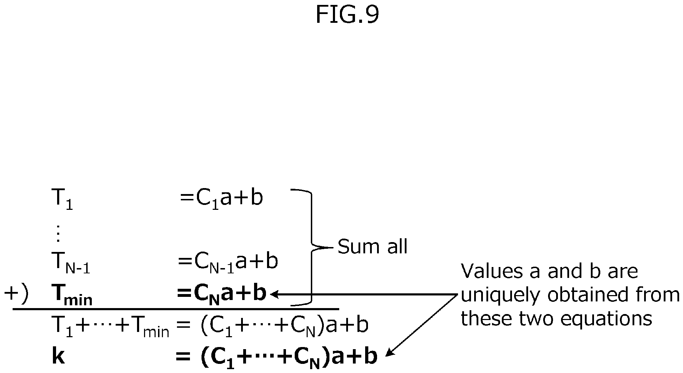

(i) The transaction number determining unit 3 calculates the values a and b of the monotonically decreasing function $f(x)=ax+b$ based on the condition illustrated in FIG. 9.
For example, the transaction number determining unit 3 sums the mathematical expression of the transaction number $T$ = execution cost $C \times a + b$ for all BCs 11, and obtains the following expressions (1) and (2) obtained by the summing.

$$"T_{mim}" = "C_N" \times a+b \qquad (1)$$

$$"T_1" + ... + "T_{mim}" = k = ("C_1" + ... + "C_N") \times a+b \qquad (2)$$

(ii) The transaction number determining unit 3 substitutes $"C_1", ..., "C_{N-1}"$ into the monotonically decreasing function $f(x)$ to calculate $"T_1", ..., "T_{N-1}"$. Since $"T_1", ..., "T_{N-1}"$ each can be a real number, the transaction number determining unit 3 may use, as a fractional process, rounding the calculation result to the nearest integer. The fractional process may include recording the processed fraction (the difference between the calculated real number and the rounded transaction number).

Further, the transaction number determining unit 3 determines whether or not $"T_1"+...+"T_{N-1}"+"T_{min}"=k$ is satisfied and if the above sum is k-1, performs "+1" (addition of one) to $"T_j"$ (j is an integer of 1 to N) having the largest difference from the real number. On the other hand, if the above sum is k+1, the transaction number determining unit 3 performs "-1" (subtraction of one) from $"T_j"$ having the smallest difference from the real number.

The transaction number determining unit 3 outputs the $"T_1", ..., "T_{N-1}"$ calculated by the illustrated calculating process and the second privacy parameter $"T_{min}"$ ($"T_N"$) as the numbers of transactions to be generated in the "BC1" to "BCN", respectively.

This obtains the respective transaction numbers of the multiple BCs 11 among which the transaction number to be generated in a BC 11 having the smallest execution cost, e.g., the transaction number $"T_1"$ of the "BC1", comes to be the largest and the transaction number to be generated in a BC 11 having the largest execution cost, e.g., the transaction number $"T_N"="T_{min}"$ of the "BCN", comes to be the smallest.

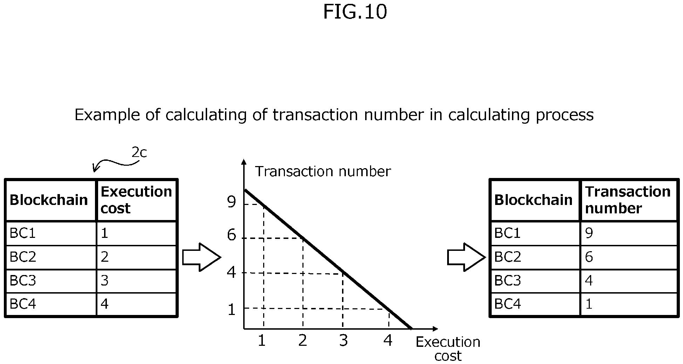

FIG. 10 is a diagram illustrating an example of calculation of a transaction number of each BC 11 in the calculating process of the one embodiment. The example of FIG. 10 assumes a case where the privacy parameter is "k=20", the number of the BCs 11 is "N=4", and the transaction number to be generated in the "BCN" ("BC4") that runs with the largest execution cost is "$T_{min}=1$". The example of FIG. 10 also assumes the "BCN" ("BC4") having the largest execution cost generates at least one fake transaction.

In the above assumption, when the execution costs of the "BC1", the "BC2", the "BC3", and the "BC4" are "1", "2", "3", and "4", respectively, the transaction numbers T of the respective BCs 11 are respectively calculated to be "9", "6", "4", and "1", as illustrated in FIG. 10.

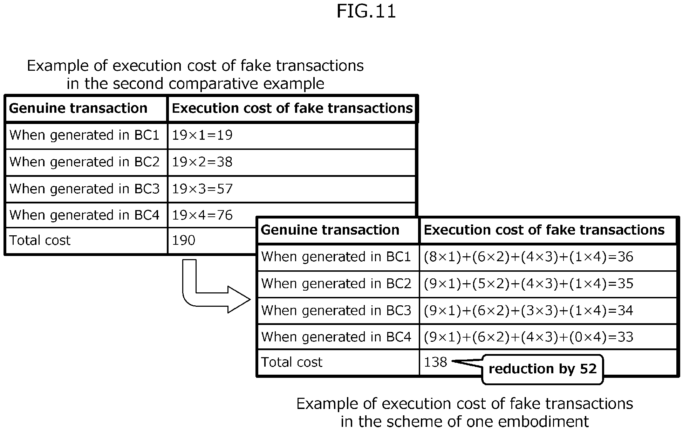

FIG. 11 is a diagram illustrating an example of comparison between an execution cost of fake transactions by the scheme according to the one embodiment and an execution cost of fake transactions when the above-described second comparative example is applied. FIG. 11 assumes that a case where each BC 11 generates one request for a genuine transaction, which means four requests are generated in total. The calculation condition and the transaction number of each BC 11 in the scheme according to the one embodiment in the example of FIG. 11 are the same as those of the example of FIG. 10.

As illustrated in FIG. 11, in the second comparative example, each time a genuine transaction is generated, the execution cost of fake transactions is (an execution cost of BC 11 in which the genuine transaction is generated) $\times$ "k-1". Therefore, assuming that a request for a genuine transaction is generated from each BC 11, which means four requests in total, the total cost is "190" in the second comparative example.

On the other hand, as illustrated in FIG. 11, according to the scheme of the one embodiment, when a genuine transaction is generated in the "BC1", the execution cost of fake transactions in the "BC1" is obtained by subtracting an execution cost of the one genuine transaction, i.e., calculated by the expression of $"T_1-1=8" \times "C_1=1"$. In addition, the execution costs of fake transactions in the "BC2", the "BC3", and the "BC4" are $"T_2=6" \times "C_2=2"$, $"T_3=4" \times "C_3=3"$, $"T_4=1" \times "C_4=4"$, respectively. Therefore, the execution cost of fake transactions in all of the BCs 11 when a genuine transaction is generated in the "BC1" is "36".

If the execution cost of a case where a genuine transaction is generated in each of the "BC2", the "BC3", and the "BC4", the total execution cost when a request for a genuine transaction is generated four times in total is calculated likewise to be "138" in the scheme of the one embodiment.

As such, in the example of FIG. 11, the scheme of the one embodiment can reduce the execution cost of the fake transactions by "52" as compared with the second comparative example.

As described above, in relation to the inconvenience of the above first and the second comparative examples, the scheme of one embodiment can reduce the execution cost of the fake transactions while ensuring the concealment of the genuine transaction by inhibiting the genuine transaction from being uniquely identified.

In the example of FIG. 8, the monotonically decreasing function $f(x)=ax+b$ is used as a predetermined function, but the function is not limited thereto. Alternatively, various functions with two coefficients (variables) a and b may be used, for example.

Returning to the description of FIG. 4, the transaction generation requesting unit 4 carries out a process of determining a mixing help request destination of the mixing helper based on the number T of transactions to be generated in each BC 11 determined by the transaction number determining unit 3 and requesting the mixing request destination to perform the mixing.

For example, the transaction generation requesting unit 4 may determine a mixing helper that satisfies the condition for the determined transaction number T by referring to the genuine transaction information 2a and the mixing helper information 2b. Then, the transaction generation requesting unit 4 may notify the contact details of the applicant of the genuine transaction and the specified mixing helper of a request to generate a transaction in helping the mixing (e.g., via e-mail transmission).

The transaction generation requesting unit 4 may store, as the request information 2d into the memory unit 2, for example, information related to the genuine transaction of the applicant to be a request target and fake transactions of the mixing helper.

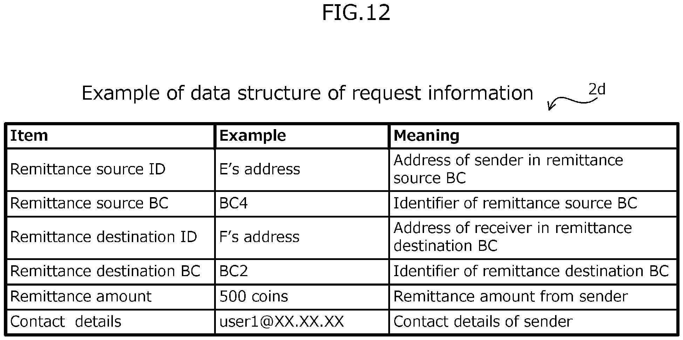

FIG. 12 is a diagram illustrating an example of a data structure of the request information 2d. As illustrated in FIG. 12, the request information 2d may have a data structure similar to that of the genuine transaction information 2a or the mixing helper information 2b illustrated in FIG. 5 or 6. FIG. 12 illustrates an example of a transaction that a user E in the "BC4" remits the "500 coins" to the user F in the "BC2", but the request information 2d may include information on multiple transactions, e.g., genuine and fake transactions, to be generated in the respective BCs 11 in response to requests. The transaction generation requesting unit 4 may generate the request information 2d and update the mixing helper information 2b regarding a mixing helper that the request is transmitted to. Updating of the mixing helper information 2b may include, for example, once removing a helper that has completed helping the mixing from the list.

Each of the applicant of a genuine transaction and the mixing helper requested by the transaction generation requesting unit 4 uses the terminal device 13 to perform a transaction execution process on its own remittance source BC 11. The transaction execution process may be implemented by any known techniques, for example.

The CA monitoring unit 5 monitors a connection chain account (CA) and monitors whether the genuine transaction and each fake transactions requested to the mixing helper are executed or not on the basis of the request information 2d.

For example, the CA monitoring unit 5 may confirm that all of the remittance source IDs included in the request information 2d made deposits corresponding to the remittance amounts into the CAs of the respective remittance source BCs 11. In the example of FIG. 12, the CA monitoring unit 5 confirms that the deposit corresponding to "500 coins" has been made from "E's address" to the CA of the "BC4". When confirming the deposits (remittances) for all entries set in the request information 2d, the CA monitoring unit 5 may notify the credit transferring unit 6 of "start transfer" (e.g., by sending a message).

In response to the receipt of the message "start transfer" from the CA monitoring unit 5, the credit transferring unit 6 executes a credit transferring process based on the request information 2d.

For example, in the credit transferring process, the credit transferring unit 6 applies, to the remittance destination BC 11, a transaction that requests deposits corresponding to the remittance amounts from the CAs of all remittance destination BCs 11 included in the request information 2d to the respective remittance destination IDs. In the example of FIG. 12, the credit transferring unit 6 applies, to the "BC2", a transaction that requests a deposit of "500 coins" from the CA of the "BC2" to the "F's address". The credit transferring unit 6 may execute the credit transferring process for all entries set in the request information 2d, and then may end the process.

The processes performed by the CA monitoring unit 5 and the credit transferring unit 6 may be achieved by various known methods, for example. As an example, the CA monitoring unit 5, the credit transferring unit 6, or both may control the mixing of the transactions by a method similar to that performed by the CC 120 according to the second scheme described above.

As described above, the system 1 of the one embodiment can reduce the execution cost of fake transactions for concealing a genuine transaction of the concealing target as compared with the above-described second scheme.

Some BCs that handle virtual currencies adopt a scheme in which transactions are collectively executed using a micropayment mechanism to save the transaction execution cost. The system 1 according to the one embodiment can achieve the above-described advantages even when handling a transaction between virtual currencies that do not have a mechanism such as micropayment.

(1-4) Example of Operation:

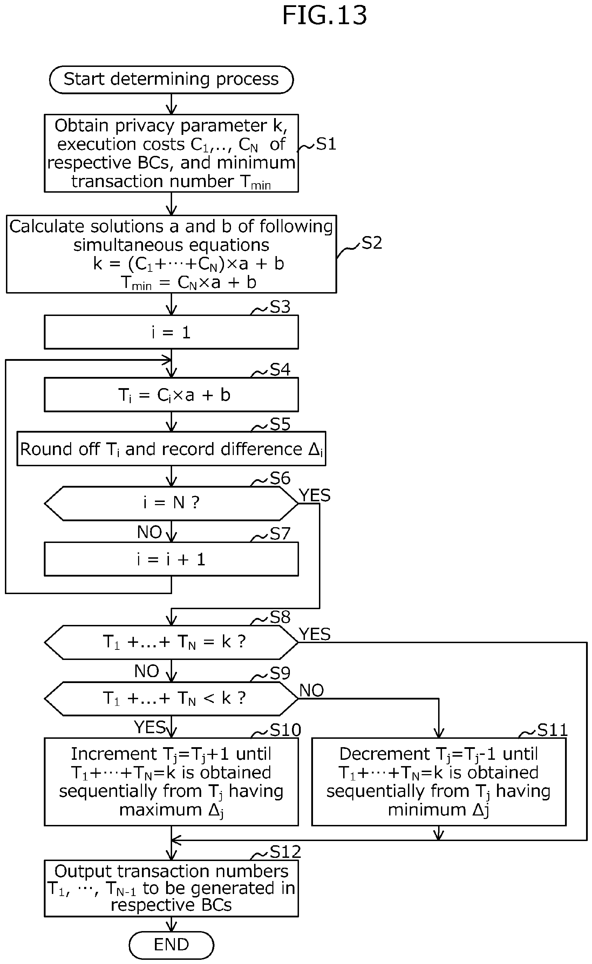

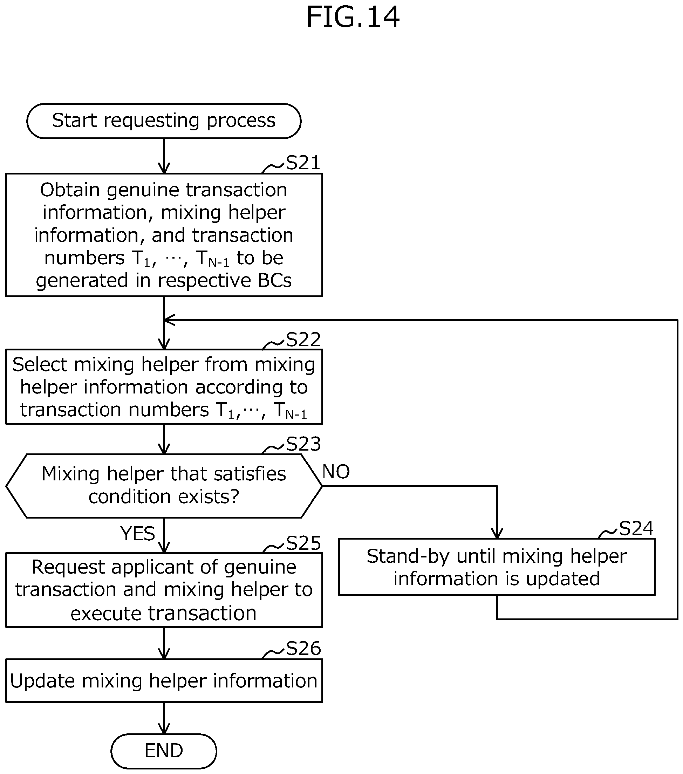

FIG. 13 is a flow diagram for explaining an example of an operation of a determining process of a transaction number in the CC 12; and FIG. 14 is a flow diagram for explaining an example of an operation of a requesting process of generating a transaction in the CC 12.

(1-4-1) Determining Process:

As illustrated in FIG. 13, the transaction number determining unit 3 in the CC 12 obtains the privacy parameter k, the execution costs "$C_1$", ..., "$C_N$" of the respective BCs 11 (see execution cost information 2c), and the minimum transaction number "$T_{min}$" (Step S1) .
The transaction number determining unit 3 calculates solutions a and b of following simultaneous equations (Expressions (3) and (4)) (Step S2).

$$k = (\text{``}C_1\text{''} + ... + \text{``}C_N\text{''}) \times a + b \qquad (3)$$

$$\text{``}T_{min}\text{''} = \text{``}C_N\text{''} \times a + b \qquad (4)$$

The transaction number determining unit 3 sets an initial value "1" for a variable i being an integer of 1 to N (Step S3), and calculates "$T_i$"="$C_i$"$\times$a+b (Step S4).
The transaction number determining unit 3 performs a fractional process, for example, rounding, on the "$T_i$", and records the difference "$\Delta_i$" into the memory unit 2, for example (Step S5).
The transaction number determining unit 3 determines whether or not i=N is satisfied (Step S6), and when i=N is not satisfied (NO in Step S6), adds one to i (Step S7). Then the process proceeds to Step S4.
On the other hand, when i=N (YES in Step S6), the transaction number determining unit 3 determines whether or not "$T_1$"+...+"$T_N$"=k is satisfied (Step S8), and when "$T_1$"+...+"$T_N$"=k is satisfied (YES in Step S8), the process proceeds to Step S12.
If "$T_1$"+...+"$T_N$"=k is not satisfied (NO in Step S8), the transaction number determining unit 3 determines whether or not "$T_1$"+...+"$T_N$"<k is satisfied (Step S9).
If "$T_1$"+...+"$T_N$"<k is satisfied (YES in Step S9), the transaction number determining unit 3 adds one to "$T_j$" (j is an integer of 1 to N) sequentially from $T_j$" having the maximum "$\Delta_j$" until "$T_1$"+...+"$T_N$"=k is satisfied (Step S10), and then the process proceeds to Step S12.
On the other hand, if "$T_1$"+...+"$T_N$"<k is not satisfied (NO in Step S9), the transaction number determining unit 3 adds one to "$T_j$" sequentially from "$T_j$" having the smallest "$\Delta_j$" until "$T_1$"+...+"$T_N$"=k is satisfied (Step S11), and then the process proceeds to Step S12.
In Step S12, the transaction number determining unit 3 outputs the transaction numbers "$T_1$", ..., "$T_{N-1}$" to be generated in the respective BCs 11, for example, notifies the transaction generation requesting unit 4 of the transaction numbers, and then the process ends.

(1-4-2) Requesting Process:

As illustrated in FIG. 14, the transaction generation requesting unit 4 of the CC 12 obtains the genuine transaction information 2a, the mixing helper information 2b, and the transaction numbers "$T_1$", ... , "$T_{N-1}$" (and "$T_N$"="$T_{min}$") to be generated in the respective BCs 11 (Step S21).
The transaction generation requesting unit 4 selects the mixing helper(s) from the mixing helper information 2b in accordance with the transaction numbers "$T_1$", ..., "$T_{N-1}$" (Step S22) . For example, the transaction generation requesting unit 4 may select the mixing helper(s) such that the numbers "$T_1$", ..., "$T_{N-1}$" and "$T_N$" of the transactions to the BCs 11 of the remittance source and destination, including the genuine transaction, are satisfied. At this time, the transaction generation requesting unit 4 may select, for example, only a candidate(s) that is capable of transferring the same amount of money as the remittance amount of the genuine transaction from the candidates for the mixing helper in the mixing helper information 2b.
The transaction generation requesting unit 4 determines whether or not a mixing helper that satisfies the above-described condition exists (whether or not a mixing helper that satisfies the condition is selected) in Step S22 (Step S23).
If a mixing helper that satisfies the condition does not exist (is not selected) (NO in Step S23), the transaction generation requesting unit 4 waits until the mixing helper information 2b is updated (Step S24), and then the process proceeds to Step S22.

If a mixing helper that satisfies the condition exists (is selected) (YES in Step S23), the transaction generation requesting unit 4 requests the applicant of the genuine transaction and the selected mixing helper to execute the transactions (Step S25).

The transaction generation requesting unit 4 updates the mixing helper information 2b (Step S26), and then the process ends. In Step S26, as described above, the transaction generation requesting unit 4 may store the requested applicant and mixing helper as the request information 2d into the memory unit 2.

Each of the requested applicant of the genuine transaction and the requested mixing helper may perform the transaction executing process on the remittance source BC 11 by using the terminal devices 13 that they use. The CC 12 may perform mixing of the generated transactions by the CA monitoring unit 5 and the credit transferring unit 6.

(1-5) Modification:

(1-5-1) First Modification:

The scheme of the one embodiment is useful, for example, when the probability of generation of a genuine transaction in each BC 11 is uniform or when a genuine transaction is generated frequently on a BC that runs with a high execution cost.

Incidentally, in the scheme of the second comparative example described above, all fake transactions are generated on the same BC 11 as that of the remittance sender of the genuine transaction.

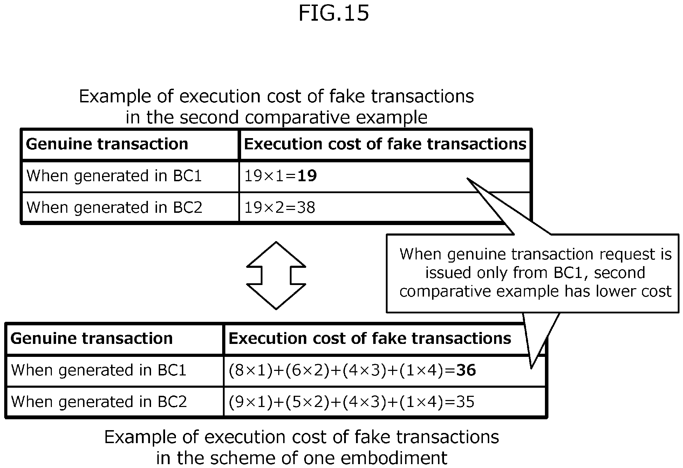

As illustrated in FIG. 15, when a large number of genuine transactions are generated on a BC 11 that runs with a low execution cost, the execution cost of fake transactions may be reduced more by adopting the scheme of the above-described second comparative example in some cases.

Therefore, the first modification will now describe a scheme that further reduces the execution cost by switching (selecting), based on a generation state of genuine transactions in the past, between the scheme of the one embodiment which is an example of a first generating process and the scheme of the second comparative example which is an example of a second generating process.

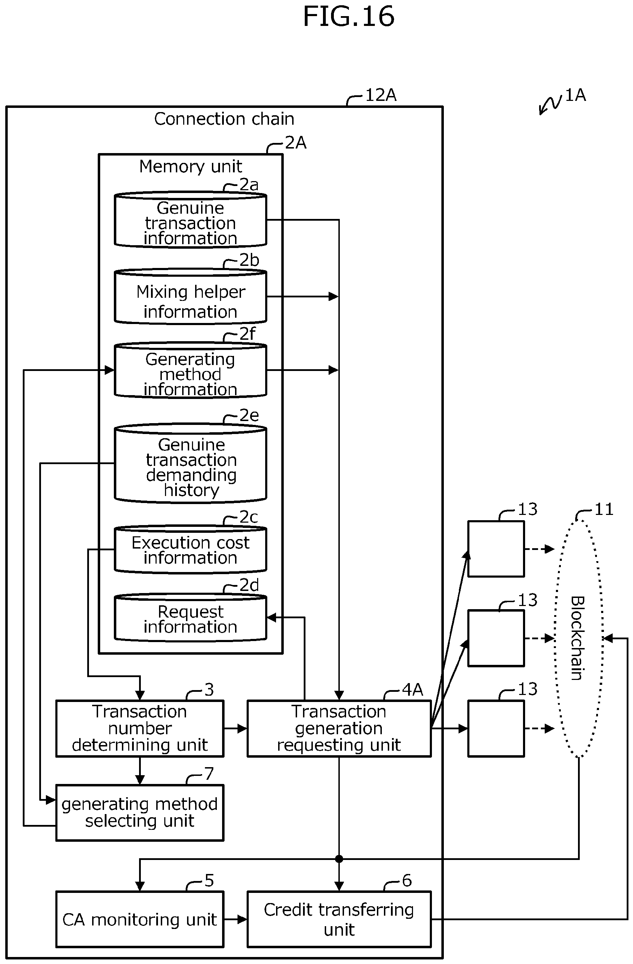

FIG. 16 is a block diagram illustrating an example of a functional configuration of a system 1A according to the first modification. As illustrated in FIG. 16, the system 1A may include a CC 12A instead of the CC 12 illustrated in FIG. 4. The CC 12A may include a memory unit 2A and a transaction generation requesting unit 4A which are different from the memory unit 2 and the transaction generation requesting unit 4 illustrated in FIG. 4, and may further include a generating method selecting unit 7. The transaction number determining unit 3, the transaction generation requesting unit 4A, the CA monitoring unit 5, the credit transferring unit 6, and the generating method selecting unit 7 are collectively one example of a controlling unit.

In the following description of the first modification, the configurations, the processes, or the functions that are not specifically mentioned are assumed to be the same as the configurations, the processes, or the functions according to the one embodiment described above.

The memory unit 2A may store a genuine transaction demanding (requesting) history 2e and generating method information 2f in addition to the information stored in the memory unit 2.

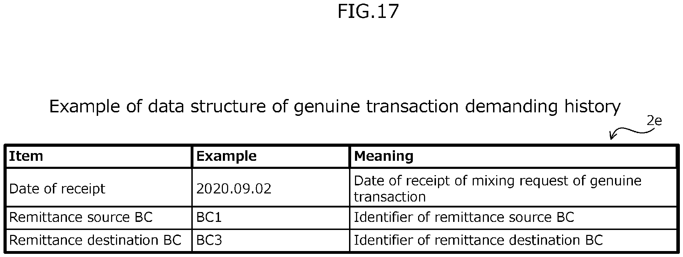

FIG. 17 is a diagram illustrating an example of a data structure of the genuine transaction demanding history 2e. As illustrated in FIG. 17, the genuine transaction demanding history 2e may illustratively include items of a "date of receipt", a "remittance source BC", and a "remittance destination BC".

The "date of receipt" is a date (or date and time) on which a mixing request of a genuine transaction is received, and for example, a date such as "2020.09.02" may be set.

The "remittance source BC" is an identifier of the remittance source BC 11, such as "BC1". The "remittance destination BC" is an identifier of the remittance destination BC 11, such as "BC3".

The generating method information 2f is information indicating a generating method for a fake transaction to be applied in a next given time period, and for example, a value indicating the "second comparative example" or the "scheme of the one embodiment" may be set. The given time period is a preset time period and is an example of a first given time period. The given time period may be, for example, from a few minutes to several days or more, depending on the operation, the usage or the like of the system 1A.

The generating method selecting unit 7 selects a generating method for a fake transaction of the next given time period from past genuine transaction requests based on the genuine transaction demanding history 2e and, for example, outputs a value indicating either one of the "second comparative example" and the "scheme of the one embodiment". For example, the generating method selecting unit 7 may store, into the generating method information 2f, a generating method to be outputted.

The selecting process of the generating method by the generating method selecting unit 7 may include, for example, the following processes of (I) and (II).

(I) The generating method selecting unit 7 calculates, from the genuine transaction demanding history 2e, execution costs of one or more fake transactions generated when each of the methods of the one embodiment and the second comparative example is adopted for each of the n latest given time periods (n is an integer of one or more).

(II) The generating method selecting unit 7 determines the method that achieves low execution costs a larger number of times in the n latest given time periods as the generating method for a fake transaction of the next given time period. This means that the generating method selecting unit 7 selects a generating method for a fake transaction of the next given time period based on the result of comparison between the execution cost by the scheme of the one embodiment and the execution cost by the scheme of the second comparative example. The symbol n may represent, for example, an odd number, but is not limited thereto, and may be an even number.

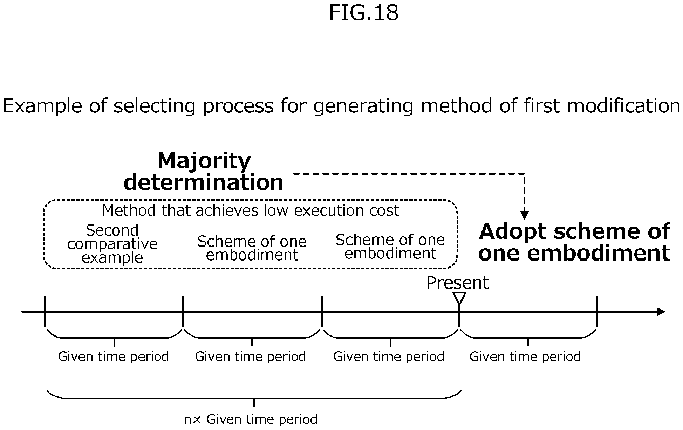

FIG. 18 is a diagram for explaining an example of a selecting process for a generating method by the generating method selecting unit 7. In the example of FIG. 18, the generating method selecting unit 7 adopts the scheme of the one embodiment (which is the winner of majority determination) that achieves low execution costs a larger number of times as the next generating method.

The generating method selecting unit 7 may determine a method to be adopted in the next given time period by weighting so as to emphasize the nearer latest given time period in place of simple majority determination in the n given time periods.

The transaction generation requesting unit 4A makes the above-described request to the applicant and the mixing helper on the basis of the transaction number T to be generated in each BC 11 determined by the transaction number determining unit 3, using the generating method indicated by the generating method information 2f.

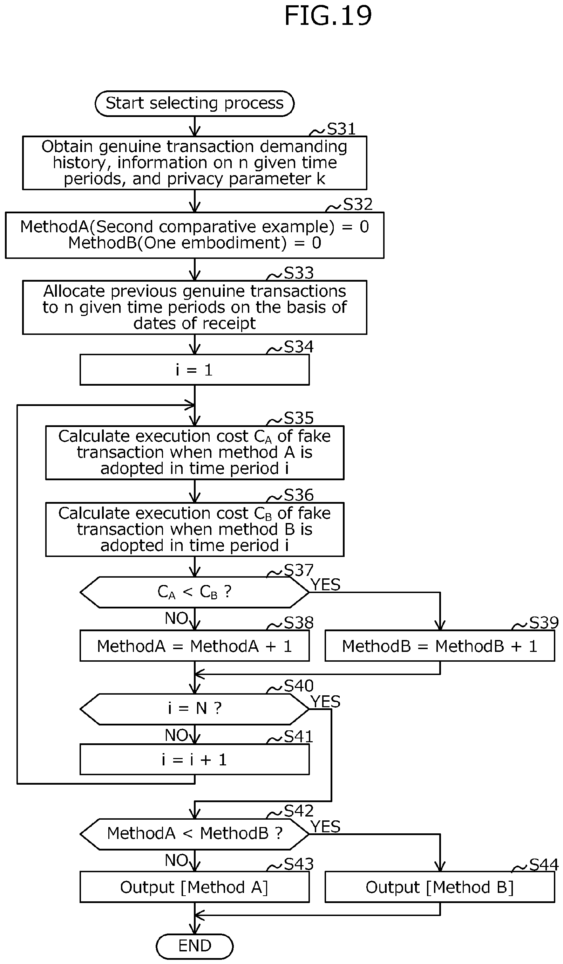

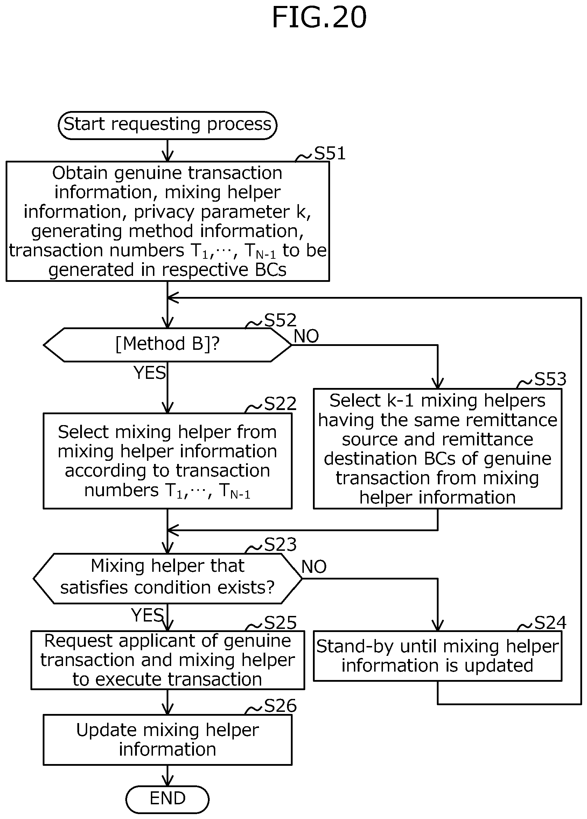

Next, an example of an operation in the system 1A according to the first modification will now be described. FIG. 19 is a flow diagram for explaining an example of an operation of the selecting process for a generating method in the CC 12A, and FIG. 20 is a flow diagram for explaining an example of an operation of the requesting process of generating a transaction in the CC 12A.

First, by referring to FIG. 19, an example of the operation of the selecting process of a generating method will now be described. As illustrated in FIG. 19, the generating method selecting unit 7 obtains the genuine transaction demanding history 2e, information on n given time periods, and information on the privacy parameter k (Step S31).

The generating method selecting unit 7 sets the initial value "0" for each of the variable "MethodA" for the second comparative example and the variable "MethodB" for the scheme of the one embodiment (Step S32). In the following description, the second comparative example is referred to as a method A, and the scheme of the one embodiment is referred to as a method B.

The generating method selecting unit 7 allocates past genuine transaction requests to n given time periods on the basis of dates of receipt (Step S33).

The generating method selecting unit 7 sets the initial value "1" for the variable i being an integer of 1 to N (Step S34). Then, the generating method selecting unit 7 calculates the execution cost "$C_A$" of fake transactions when the method A is adopted in the time period i (Step S35). In addition, the generating method selecting unit 7 calculates the execution cost "$C_B$" of fake transactions when the method B is adopted in the time period i (Step S36).

The generating method selecting unit 7 determines whether "$C_A$"<"$C_B$" is satisfied (Step S37). If "$C_A$"<"$C_B$" is not satisfied (NO in Step S37), adds one to "MethodA" (Step S38), and then the process proceeds to Step S40. On the other hand, if "$C_A$"<"$C_B$" is satisfied (YES in Step S37), the generating method selecting unit 7 adds one to "MethodB" (Step S39), and then the process proceeds to Step S40.

In Step S40, the generating method selecting unit 7 determines whether or not i=N is satisfied. If i=N is not satisfied (NO in Step S40), the generating method selecting unit 7 adds one to i (Step S41), and then the process proceeds to Step S35.

If i=N is satisfied (YES in Step S40), the generating method selecting unit 7 determines whether or not "MethodA"<"MethodB" is satisfied (Step S42).

If "MethodA"<"MethodB" is not satisfied (NO in Step S42), the generating method selecting unit 7 outputs information indicating the method A (denoted as [Method A]), for example, stores the information as the generating method information 2f into the memory unit 2A (Step S43), and then the process ends.

If "MethodA"<"MethodB" is satisfied (YES in Step S42), the generating method selecting unit 7 outputs information indicating the method B (denoted as [Method B]) (Step S44), and then the process ends.

Next, by referring to FIG. 20, an example of the operation of the requesting process for generating a transaction will now be described. The processes (steps) not mentioned in the following description are the same as those in the flow diagram illustrated in FIG. 14.

As illustrated in FIG. 20, the transaction generation requesting unit 4A obtains the genuine transaction information 2a, the mixing helper information 2b, the privacy parameter k, the generating method information 2f, and the transaction numbers "$T_1$", ..., "$T_{N-1}$" (and "$T_N$") (Step S51).

The transaction generation requesting unit 4A confirms the method indicated by the generating method information 2f. For example, the transaction generation requesting unit 4A determines whether or not the generating method information 2f indicates the method B (Step S52).

When the generating method information 2f is information indicating the method B (YES in Step S52), the process proceeds to Step S22. On the other hand, when the generating method information 2f is information indicating the method A (NO in Step S52), the transaction generation requesting unit 4A selects, from the mixing helper information 2b, "k-1" mixing helpers having the same remittance source BC 11 and the same remittance destination BC 11 of the genuine transaction (Step S53), and the process proceeds to Step S23.

(1-5-2) Second Modification:

The first modification described a case where the generating method for a fake transaction to be adopted in the next time period (next term) is determined in accordance with the BC 11 that has generated the past genuine transactions and the number of the generated transactions.

The second modification will now describe a scheme that determines the generating method for a fake transaction to be adopted in the next time period on the basis of total transaction numbers on the BCs 11 until the present time.

For example, a genuine transaction is generated when a user uses a token earned on a BC 11. Therefore, in a BC 11 where transactions are active, many users earn tokens, so that a large number of requests for genuine transactions are expected. In addition, a time lag often occurs from when a user earns a credit to when the user uses the credit.

Considering these tendency, the second modification describes a scheme that predicts the number of genuine transactions of the next given time period based on the overall transaction numbers on the BCs 11 (in past multiple given time periods) until the present time, and determines the generating method for a fake transaction to be adopted in the next time period on the basis of the predicted number of genuine transactions. The given time period according to the second modification is an example of the second given time period, and may be the same as or different from the given time period according to the first modification.

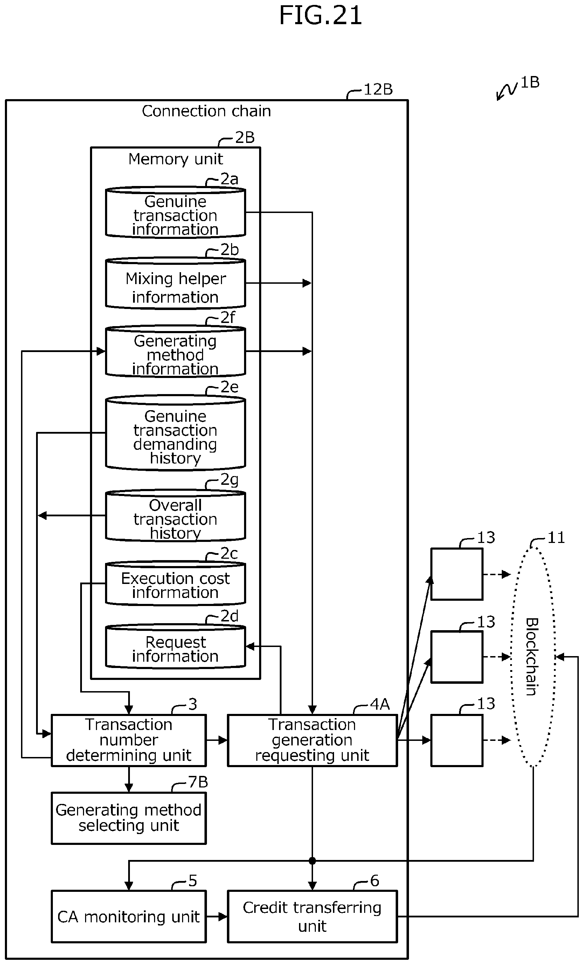

FIG. 21 is a block diagram illustrating an example of a functional configuration of a system 1B according to the second modification. As illustrated in FIG. 21, the system 1B may include a CC 12B in place of the CC 12A illustrated in FIG. 16. The CC 12B may include a memory unit 2B and a generating method selecting unit 7B different from the memory unit 2A and the generating method selecting unit 7 illustrated in FIG. 16, respectively. The transaction number determining unit 3, the transaction generation requesting unit 4A, the CA monitoring unit 5, the credit transferring unit 6, and the generating method selecting unit 7B are collectively one example of a controlling unit.

In the following description of the second modification, the configurations, the processes, or the functions that are not specifically mentioned are assumed to be the same as the configurations, the processes, or the functions according to the one embodiment described above.

The memory unit 2B may store the overall transaction history 2g in addition to the information that the memory unit 2A stores.

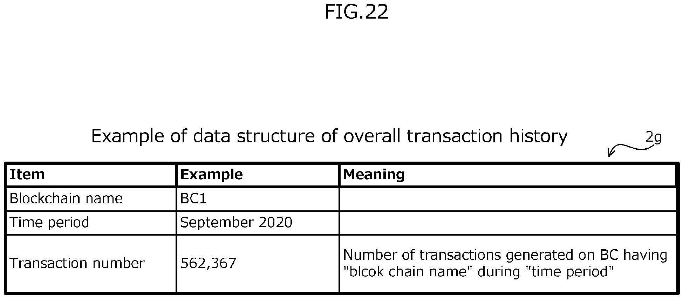

FIG. 22 is a diagram illustrating an example of a data structure of the overall transaction history 2g. As illustrated in FIG. 22, the overall transaction history 2g may illustratively include items of a "blockchain name", a "time period", and a "transaction number" for each BC 11.

The "blockchain name" is the name of the target BC 11 of the entry, and for example, an identifier such as "BC1" may be set.

The "time period" is a period of counting the transactions, and for example, a period such as "September 2020" (i.e., one month) may be set.

The "transaction number" is the number of transactions generated on a BC 11 having the "blockchain name" during the "time period", and for example, a numerical value such as "562,367" may be set.

The example of FIG. 22 assumes that the "transaction number" is set in the overall transaction history 2g, but the setting is not limited to this. In addition to or in place of the "transaction number", an "overall credit" transferred on the BC 11 having the "blockchain name" in the "time period" may be set in the overall transaction history 2g, for example. Here, the "overall credit" may be set to a numerical value converted into a virtual value on the CC 12B which value is determined on the basis of the exchange rate of the value between the BCs 11.

The generating method selecting unit 7 selects a generating method for a fake transaction of the next given time period on the basis of the genuine transaction demanding history 2e and the overall transaction history 2g, and for example, outputs a value indicating either one of the "second comparative example" and the "scheme of the one embodiment". For example, the generating method selecting unit 7B may store, into the generating method information 2f, a generating method to be outputted.

The selecting process of the generating method by the generating method selecting unit 7B may include, for example, the following processes of (III) to (IV).

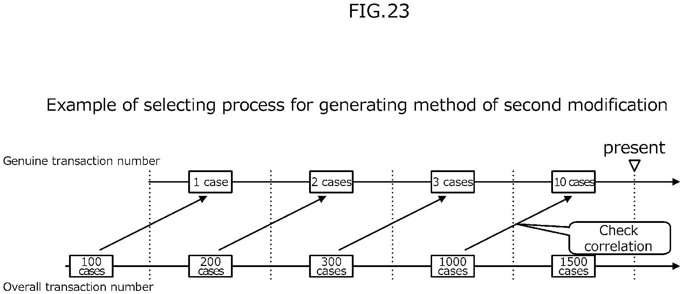

(III) As illustrated in FIG. 23, the generating method selecting unit 7B extracts a BC 11 exhibiting a high correlation value between the past overall transaction number and the number of genuine transactions generated in the past when the numbers in each BC 11 in staggered time periods are compared. In example of FIG. 23, the overall transaction number and the genuine transaction number that are staggered by one time period are compared to confirm the correlation, but the present invention is not limited thereto. Alternatively, the generating method selecting unit 7B may compare the numbers staggered by two time periods or more. Further, the generating method selecting unit 7B may calculate multiple correlations and determine one or more optimum time periods to be staggered.

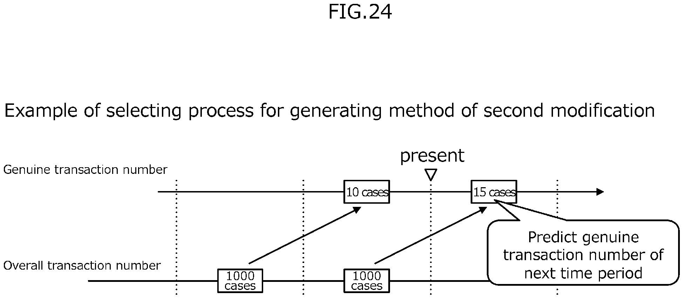

(IV) As illustrated in FIG. 24, the generating method selecting unit 7B predicts (calculates) the genuine transaction number of the next given time period from the past overall transaction number of a BC 11 that a high correlation is found in the above process (III). For example, the generating method selecting unit 7B may calculate the genuine transaction number of the next given time period from the past overall transaction number by a regression analysis using the overall transaction number as an explanatory variable and the genuine transaction number as a responsive variable. Alternatively, the generating method selecting unit 7B may predict the genuine transaction number of the next given time period based on at least one of the past overall transaction number on the BC 11 and the overall credit transferred on the BC 11 in the past.

(V) The generating method selecting unit 7B calculates execution costs of fake transactions to be generated when the method of the scheme of the one embodiment and the second comparative example are adopted on the basis of the predicted genuine transaction number. Then, the generating method selecting unit 7B adopts a method having a smaller calculated execution cost to be the generating method for a fake transaction of the next given time period. The generating method selecting unit 7B may calculate the genuine transaction number of a BC 11 not exhibiting a high correlation in the process (III), using the value of the previous given time period.

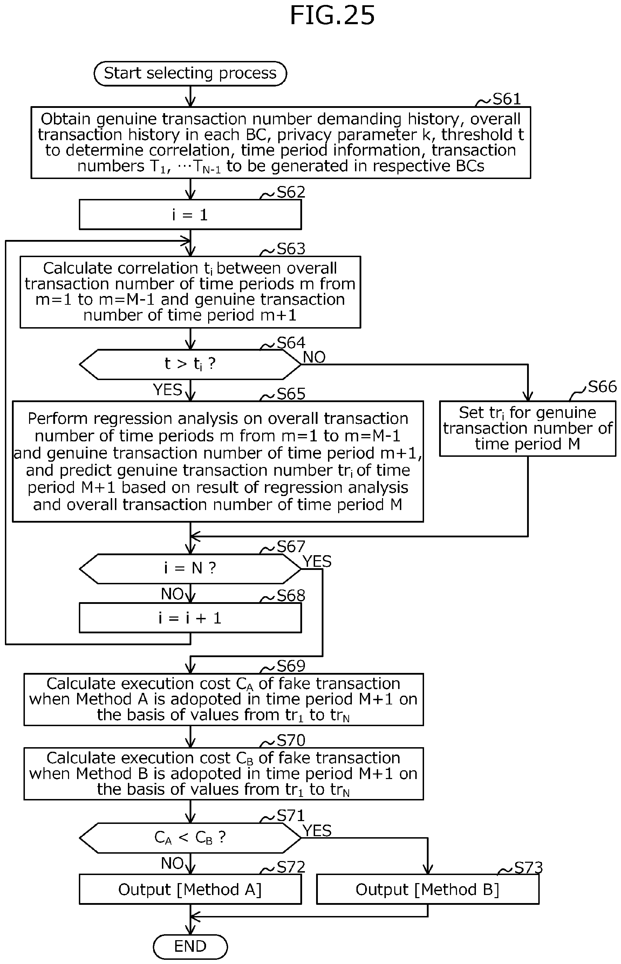

Next, an example of the operation of the system 1B according to the second modification will now be described. FIG. 25 is a flow diagram for explaining an example of an operation of a selecting process for a generating method in the CC 12B.

As illustrated in FIG. 25, the generating method selecting unit 7B obtains information on the genuine transaction demanding history 2e, the overall transaction history 2g in each BC 11, a privacy parameter k, a threshold t to determine a correlation, time period information, and the transaction numbers "$T_1$", ..., "$T_{N-1}$" (and "$T_N$") to be generated in the respective BCs 11 (Step S61).

Example of the time period information may include information on a variable M (M is an integer of two or more) that divides the previous date and time into multiple time periods, and a variable m that specifies each of the divided time periods. For example, if data for the last year is divided every one month, it means "M=12", "m=1" means "last January", ..., "m=M=12" means "last December", and "m=M+1" means "this January".

The generating method selecting unit 7B sets the initial value "1" for the variable i being an integer of 1 to N (Step S62). Then, the generating method selecting unit 7B calculates a correlation "$t_i$" between the overall transaction number of the time period m from "m=1" to "m=M-1" and the genuine transaction number of the time period "m+1" (Step S63).

The generating method selecting unit 7B determines whether or not "T">"$t_i$" is satisfied (Step S64). If "T">"$t_i$" is satisfied (YES in Step S64), the generating method selecting unit 7B performs a regression analysis on the overall transaction number of the time period m from "m=1" to "m=M-1" and the genuine transaction number of the time period "m+1". Then, the generating method selecting unit 7B predicts a genuine transaction number of the time period "M+1" as "$tr_i$" (Step S65) based on the result of the regression analysis and the overall transaction number of the time period M, and then the process proceeds to Step S67.

On the other hand, if "T">"$t_i$" is not satisfied (NO in Step S64), the generating method selecting unit 7B determines the genuine transaction number of the time period M as "$tr_i$" (Step S66), and then the process proceeds to Step S67. In Step S66, the generating method selecting unit 7B may alternatively determine, for example, the average value in the time period M (time periods from "m=1" to "m=M") as "$tr_i$".

In Step S67, the generating method selecting unit 7B determines whether i=N is satisfied. If i=N is not satisfied (NO in Step S67), the generating method selecting unit 7B adds one to i (Step S68), and then the process proceeds to Step S63.

If i=N is satisfied (YES in Step S67), the generating method selecting unit 7B calculates the execution cost "$C_A$" of one or more fake transactions when the method A is adopted for the time period "M+1" on the basis of the values "$tr_1$" to "$tr_N$" (Step S69). In addition, the generating method selecting unit 7B calculates the execution cost "$C_B$" of fake transactions when the method B is adopted for the time period "M+1" on the basis of the values "$tr_1$" to "$tr_N$" (Step S70).

The generating method selecting unit 7B determines whether or not "$C_A$"<"$C_B$" is satisfied (Step S71), and if "$C_A$"<"$C_B$" is not satisfied (NO in Step S71), outputs information indicating the method A (denoted as [Method A]), for example, stores the information as the generating method information 2f into the memory unit 2B (Step S72), and then the process ends.

If "$C_A$"<"$C_B$" is satisfied (YES in Step S71), the generating method selecting unit 7B outputs information indicating the method B (denoted as [Method B]) (Step S73), and then the process ends.

(1-6) Example of Hardware Configuration

An apparatus that achieves each of the CCs 12, 12A, and 12B of the above-described systems 1, 1A, and 1B may be a virtual server (VM; Virtual Machine) or a physical server. The functions of each of the CCs 12, 12A, and 12B may be achieved by one computer or by two or more computers. At least some of the functions of each of the CCs 12, 12A, and 12B may be implemented using HW (Hardware) resources and NW (Network) resources provided by cloud environments.

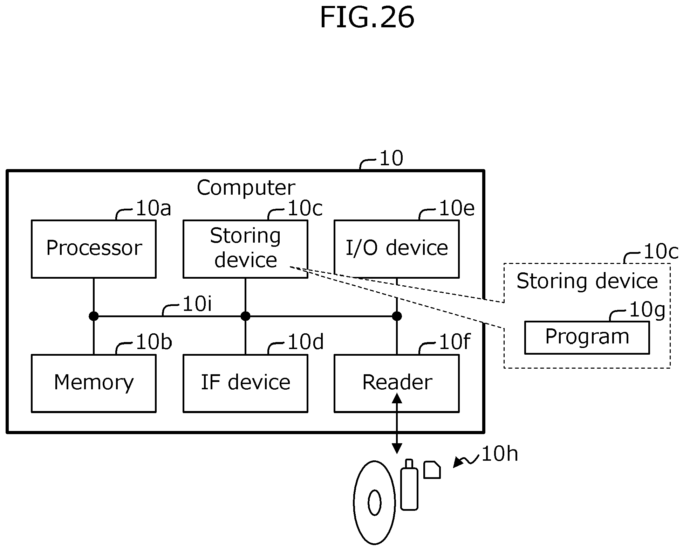

FIG. 26 is a block diagram illustrating an example of a hardware configuration of a computer 10 that achieves the function of each of the CCs 12, 12A, and 12B. When multiple computers are used as the HW resources for achieving the functions of each of the CCs 12, 12A, and 12B, each computer may include the HW configuration illustrated in FIG. 26.

As illustrated in FIG. 26, the computer 10 may illustratively include, as the HW configuration, a processor 10a, a memory 10b, a storing device 10c, an IF (Interface) device 10d, an I/O (Input/Output) device 10e, and a reader 10f.

The processor 10a is an example of an arithmetic processing device that performs various controls and calculations. The processor 10a may be connected to each block in the computer 10 via a bus 10i so as to be mutually communicable. The processor 10a may be a multi-processor including multiple processors or a multi-core processor having multiple processor cores, or may be configured to have multiple multi-core processors.

The processor 10a may be, for example, integrated circuits (ICs) such as CPUs (Central Processing Units), MPUs (Micro Processing Units), GPUs (Graphics Processing Units), APUs (Accelerated Processing Units), DSPs (Digital Signal Processors), ASICs (Application Specific ICs), FPGAs (Field-Programmable Gate Arrays), or a combination of two or more ICs described above.

The memory 10b is an example of an HW that stores information such as various data and programs. The memory 10b may be, for example, a volatile memory such as a DRAM (Dynamic Random Access Memory), a nonvolatile memory such as a PM (Persistent Memory), or both.

The storing device 10c is an example of an HW that stores information such as various data and programs . The storing device 10c may be, for example, various storage devices exemplified by a magnetic disk device such as an HDD (Hard Disk Drive), a semiconductor drive device such as an SSD (Solid State Drive), or nonvolatile memories. The non-volatile memory may be, for example, a flash memory, an SCM (Storage Class Memory), a ROM (Read Only Memory), or the like.

Various pieces of information stored in the memory units 2, 2A, and 2B illustrated in FIGS. 4, 16, and 21 as well as various parameters such as a privacy parameter k may be stored in a storing region included in the memory 10b, the storing device 10c, or both.

The storing device 10c may store a program 10g (transaction control program) that achieves a part or all of various functions of the computer 10. For example, the processor 10a of the CCs 12, 12A, and 12B can achieve functions as the transaction number determining unit 3, the transaction generation requesting units 4 and 4A, the CA monitoring unit 5, the credit transferring unit 6, and the generation method selecting units 7 and 7B by expanding the program 10g stored into the storing device 10c onto the memory 10b and executing the program 10g.

The IF device 10d is an example of a communication IF that controls the connection and communication in at least one of a network in the CC 12, 12A, or 12B, a network between each BC 11 and the CC 12, 12A, or 12B, and a network between each terminal device 13 and the CC 12, 12A, or 12B. For example, the IF device 10d may include an adapter compatible with a LAN (Local Area Network) such as Ethernet (registered trademark), an optical communication such as FC (Fibre Channel), or the like. The adapter may be adapted to a communication scheme of at least one of a wireless scheme and a wired scheme. For example, the CCs 12, 12A, and 12B may be connected to each of the BCs 11 and the terminal devices 13 via the IF device 10d so as to be mutually communicable. For example, the program 10g may be downloaded from a network to the computer 10 via the communication IF and stored into the storing device 10c.

The I/O device 10e may include one of an input device and an output device, or both. The input device may be, for example, a keyboard, a mouse, or a touch panel. The output device may be, for example, a monitor, a projector, or a printer.

The reader 10f is an example of a reader that reads information on the data and programs recorded on a recording medium 10h. The reader 10f may include a connection terminal or a device to which the recording medium 10h can be connected or inserted. The reader 10f may be, for example, an adapter compatible with a USB (Universal Serial Bus) or the like, a drive device that accesses a recording disk, a card reader that accesses a flash memory such as an SD card, etc. The recording medium 10h may store the program 10g, and the reader 10f may read the program 10g from the recording medium 10h and store it into the storing device 10c.

The recording medium 10h may illustratively be a non-transitory computer-readable recording medium such as a magnetic/optical disk or a flash memory. The magnetic/optical disk may illustratively be a flexible disk, a CD (Compact Disc), a DVD (Digital Versatile Disc), a Blu-ray disk, an HVD (Holographic Versatile Disc), or the like. The flash memory may illustratively be a semiconductor memory such as a USB memory or an SD card.

The HW configuration of the computer 10 described above is merely illustrative. Thus, the HW of the computer 10 may appropriately undergo increase or decrease (e.g., addition or deletion of arbitrary blocks), division, integration in arbitrary combinations, and addition or deletion of the bus. For example, the CCs 12, 12A, and 12B may omit at least one of the I/O device 10e and the reader 10f.

(2) Miscellaneous:

The technique according to the one embodiment, and the first and second modifications described above can be changed or modified as follows.

For example, the one embodiment and the first and second modifications assume that the CCs 12, 12A and 12B each request a mixing helper of each BC 11 to generate a fake transaction, but the present invention is not limited thereto. Alternatively, the CCs 12, 12A and 12B (e.g., the function of the tumbler) may create an account that generates a fake transaction and may issue a fake transaction from the account.

Further, for example, the functional configurations included in each of the CCs 12, 12A, and 12B illustrated in FIGS. 4, 16, and 21 may be combined or divided in any combination.

Further, for example, each of the CCs 12, 12A, and 12B illustrated in FIGS. 4, 16, and 21 may have a configuration that exerts the respective process functions by multiple devices cooperating with each other through a network. As an example, the memory units 2, 2A and 2B may each be a DB (Database) server. In addition, the transaction number determining unit 3, the transaction generation requesting units 4 and 4A, the CA monitoring unit 5, the credit transferring unit 6, and the generating method selecting units 7 and 7B may be an application server, a Web server, or both (combination). In this case, multiple computers, for example, a DB server, an application server, and a Web server, may cooperate with each other via a network to achieve the respective process functions as the CCs 12, 12A, and 12B.

REFERENCE SIGNS LIST

1, 1A, 1B: system
10: computer
11, 11-1 to 11-6: blockchain (BC)
12, 12A, 12B: connection chain
13: terminal device
2, 2A, 2B: memory unit
2a: genuine transaction information
2b: mixing helper information
2c: execution cost information
2d: request information
2e: genuine transaction demanding history
2f: generating method information
2g: overall transaction history
3: transaction number determining unit
4, 4A: transaction generation requesting unit
5: connection chain account (CA) monitoring unit
6: credit transferring unit
7, 7B: generating method selecting unit

**Claims**

1. A method for transaction control comprising:

at a computer,
performing transaction control including receiving a plurality of transactions generated in a plurality of blockchain networks (11) and transmitting the plurality of transactions to one or more blockchain networks (11) corresponding to respective destinations of the plurality of transactions,
the transaction control comprising controlling, based on an execution cost to execute a transaction in each of the plurality of blockchain networks (11) and a blockchain network (11) generating a first transaction having at least one of a transmission source and a transmission destination being a concealing target among the plurality of blockchain networks (11), a number of second transactions to be generated by each of the plurality of blockchain networks (11) to conceal the first transaction.

**2.** The method for transaction control according to claim 1, wherein
the controlling of the number of the second transactions comprises controlling the number of the second transactions to be generated by each of the plurality of blockchain networks (11) such that a blockchain network (11) having a smaller execution cost for a transaction generates more number of the second transactions.

**3.** The method for transaction control according to claim 2, wherein
the controlling of the number of the second transactions comprises controlling the number of the second transactions to be generated by each of the plurality of blockchain networks (11) such that a relationship in each of the plurality of blockchain networks (11) between an execution cost and the number of the second transactions follows a decreasing function.

**4.** The method for transaction control according to any one of claims 1-3, further comprising

at the computer,
selecting one of a first generating process and a second generating process as a generating process of generating the second transactions in a next first given time period, based on one or more blockchain networks (11) each generating a first transaction in a past first given time period, the first generating process generating the second transactions in each of the plurality of blockchain networks (11) based on the controlling of the number of the second transactions, the second generating process generating multiple second transactions in a blockchain network (11) generating the first transaction.

**5.** The method for transaction control according to claim 4, wherein
the selecting of the generating process comprises selecting the generating process of the next given time period, based on a result of comparison between, when the one or more blockchain networks (11) generate the first transaction in each of one or more of the past first given time periods, an execution cost for generating the second transaction in the first generating process and an execution cost for generating the second transaction in the second generating process.

**6.** The method for transaction control according to claim 4 or 5, wherein
the selecting of the generating process comprises

estimating a number of first transactions to be generated in the plurality of blockchain networks (11) in a next second given time period, the estimating being based on at least one of a number of transactions generated in the plurality of blockchain networks (11) in a plurality of past second given time periods and an overall credit transferred in the plurality of past second given time periods, and
selecting, based on the estimated number of the first transactions, a generating process of generating the second transaction in the next second time period.

**7.** A transaction control program for causing a computer to execute a process comprising:

performing transaction control including receiving a plurality of transactions generated in a plurality of blockchain networks (11) and transmitting the plurality of transactions to one or more blockchain networks (11) corresponding to respective destinations of the plurality of transactions,
the transaction control comprising controlling, based on an execution cost to execute a transaction in each of the plurality of blockchain networks (11) and a blockchain network (11) generating a first transaction having at least one of a transmission source and a transmission destination being a concealing target among the plurality of blockchain networks (11), a number of second transactions to be generated by each of the plurality of blockchain networks (11) to conceal the first transaction.

**8.** The transaction control program according to claim 7, wherein
the controlling of the number of the second transactions comprises controlling the number of the second transactions to be generated by each of the plurality of blockchain networks (11) such that a blockchain network (11) having a smaller execution cost for a transaction generates more number of the second transactions.

9. The transaction control program according to claim 8, wherein
the controlling of the number of the second transactions comprises controlling the number of the second transactions to be generated by each of the plurality of blockchain networks (11) such that a relationship in each of the plurality of blockchain networks (11) between an execution cost and the number of the second transactions follows a decreasing function.

10. The transaction control program according to any one of claims 7-9, the process further comprising

at the computer,
selecting one of a first generating process and a second generating process as a generating process of generating the second transactions in a next first given time period, based on one or more blockchain networks (11) each generating a first transaction in a past first given time period, the first generating process generating the second transactions in each of the plurality of blockchain networks (11) based on the controlling of the number of the second transactions, the second generating process generating multiple second transactions in a blockchain network (11) generating the first transaction.

11. The transaction control program according to claim 10, wherein
the selecting of the generating process comprises selecting the generating process of the next given time period, based on a result of comparison between, when the one or more blockchain networks (11) generate the first transaction in each of one or more of the past first given time periods, an execution cost for generating the second transaction in the first generating process and an execution cost for generating the second transaction in the second generating process.

12. The transaction control program according to claim 10 or 11, wherein
the selecting of the generating process comprises

estimating a number of first transactions to be generated in the plurality of blockchain networks (11) in a next second given time period, the estimating being based on at least one of a number of transactions generated in the plurality of blockchain networks (11) in a plurality of past second given time periods and an overall credit transferred in the plurality of past second given time periods, and
selecting, based on the estimated number of the first transactions, a generating process of generating the second transaction in the next second time period.

13. An information processing apparatus comprising:

a controlling unit that performs transaction control including receiving a plurality of transactions generated in a plurality of blockchain networks (11) and transmitting the plurality of transactions to one or more blockchain networks (11) corresponding to respective destinations of the plurality of transactions,
the controlling unit being configured to control, based on an execution cost to execute a transaction in each of the plurality of blockchain networks (11) and a blockchain network (11) generating a first transaction having at least one of a transmission source and a transmission destination being a concealing target among the plurality of blockchain networks (11), a number of second transactions to be generated by each of the plurality of blockchain networks (11) to conceal the first transaction.

14. The information processing apparatus according to claim 13, wherein
the controlling unit controls, in the controlling of the number of the second transactions, the number of the second transactions to be generated by each of the plurality of blockchain networks (11) such that a blockchain network (11) having a smaller execution cost for a transaction generates more number of the second transactions.

15. The information processing apparatus according to claim 14, wherein
the controlling unit controls, in the controlling of the number of the second transactions, the number of the second transactions to be generated by each of the plurality of blockchain networks (11) such that a relationship in each of the plurality of blockchain networks (11) between an execution cost and the number of the second transactions follows a decreasing function.

**16.** The information processing apparatus according to any one of claims 13-15, wherein
the controlling unit selects one of a first generating process and a second generating process as a generating process of generating the second transactions in a next first given time period, based on one or more blockchain networks (11) each generating a first transaction in a past first given time period, the first generating process generating the second transactions in each of the plurality of blockchain networks (11) based on the controlling of the number of the second transactions, the second generating process generating multiple second transactions in a blockchain network (11) generating the first transaction.

**17.** The information processing apparatus according to claim 16, wherein
the controlling unit selects, in the selecting of the generating process, the generating process of the next given time period, based on a result of comparison between, when the one or more blockchain networks (11) generate the first transaction in each of one or more of the past first given time periods, an execution cost for generating the second transaction in the first generating process and an execution cost for generating the second transaction in the second generating process.

**18.** The information processing apparatus according to claim 16 or 17, wherein
the controlling unit, in the selecting of the generating process,

estimates a number of first transactions to be generated in the plurality of blockchain networks (11) in a next second given time period, the estimating being based on at least one of a number of transactions generated in the plurality of blockchain networks (11) in a plurality of past second given time periods and an overall credit transferred in the plurality of past second given time periods, and
selects, based on the estimated number of the first transactions, a generating process of generating the second transaction in the next second time period.

FIG.1

Value exchange BC of cooking recipe

110

100

Value exchange BC of coterie magazine

130

User A

Recipe

High rating

Connection chain

120

121

122

¥

CA
#0

CA
#1

User B

Transaction ledger
07.14 12:00
User A→CA1

111

I will buy coterie
magazine with token
acquired by my recipe

From transactions at the
same time, that user A
bought coterie magazine
of user B can be specified

Third
party

140

131

Transaction ledger
07.14 12:00
CA2→User B

# FIG.2

User A

User C

User E

Tumbler

123

User B

User D

User F

Mix k transactions

Mix k transactions

FIG.3

BC that runs with smaller execution cost is caused to generate more fake transactions

11-1(11)

11-2(11)

11-3(11)

12

11-4(11)

11-5(11)

11-6(11)

1

# FIG.4

FIG.5

Example of data structure of genuine transaction  2a

| Item | Example | Meaning |
|---|---|---|
| Remittance source ID | A's address | Address of sender in remittance source BC |
| Remittance source BC | BC4 | Identifier of remittance source BC |
| Remittance destination ID | B's address | Address of receiver in remittance destination BC |
| Remittance destination BC | BC2 | Identifier of remittance source BC |
| Remittance amount | 500 coins | Remittance amount from sender |
| Contact details | sender@XX.XX.XX | Contact details of sender |

FIG.6

Example of data structure of mixing helper information

2b

| Item | Example | Meaning |
|---|---|---|
| Remittance source ID | C's address | Address of mixing helper in remittance source BC |
| Remittance source BC | BC1 | Identifier of remittance source BC |
| Remittance destination ID | D's address | Address of mixing helper in remittance destination BC |
| Remittance destination BC | BC3 | Identifier of remittance destination BC |
| Remittance amount | 1000 coins or less, 500 coins, etc. | Remittable amount |
| Contact details | helper@XX.XX.XX | Contact Details for requesting mixing help |

# FIG.7

Example of execution cost information

2c

| Blockchain | Execution cost |
| --- | --- |
| BC1 | $C_1$ |
| BC2 | $C_2$ |
| BC3 | $C_3$ |
| BC4 | $C_4$ |
| ... | ... |
| BCN | $C_N$ |

FIG.8

Example of calculating process of transaction number of each BC

Number of transactions to be generated

Gradient a and intercept b of function f are determined by point A ▨ and transaction sum k

Passing through point A($C_N$, $T_{min}$)

Execution cost

$C_1$   $C_2$   $C_N$

| Blockchain | Execution cost |
|------------|----------------|
| BC1 | $C_1$ |
| BC2 | $C_2$ |
| ... | ... |
| BCN | $C_N$ |

2c

$T_1$

$T_2$

$T_{min}$

**Determine $T_1$,..$T_{N-1}$ such that sum of $T_1+\cdots+T_{N-1}+T_N$ becomes k**

FIG.9

$$T_1 \quad\quad = C_1 a + b$$
$$\vdots$$
$$T_{N-1} \quad = C_{N-1} a + b$$
$$+)\ \ \mathbf{T_{min}} \quad\quad \mathbf{= C_N a + b}$$
$$T_1 + \cdots + T_{min} = (C_1 + \cdots + C_N)a + b$$
$$\mathbf{k} \quad\quad\quad \mathbf{= (C_1 + \cdots + C_N)a + b}$$

Sum all

Values a and b are uniquely obtained from these two equations

FIG.10

Example of calculating of transaction number in calculating process

2c

| Blockchain | Execution cost |
|---|---|
| BC1 | 1 |
| BC2 | 2 |
| BC3 | 3 |
| BC4 | 4 |

Transaction number

9
6
4
1

1 2 3 4 Execution cost

| Blockchain | Transaction number |
|---|---|
| BC1 | 9 |
| BC2 | 6 |
| BC3 | 4 |
| BC4 | 1 |

FIG.11

Example of execution cost of fake transactions
in the second comparative example

| Genuine transaction | Execution cost of fake transactions |
|---|---|
| When generated in BC1 | 19×1=19 |
| When generated in BC2 | 19×2=38 |
| When generated in BC3 | 19×3=57 |
| When generated in BC4 | 19×4=76 |
| Total cost | 190 |

| Genuine transaction | Execution cost of fake transactions |
|---|---|
| When generated in BC1 | (8×1)+(6×2)+(4×3)+(1×4)=36 |
| When generated in BC2 | (9×1)+(5×2)+(4×3)+(1×4)=35 |
| When generated in BC3 | (9×1)+(6×2)+(3×3)+(1×4)=34 |
| When generated in BC4 | (9×1)+(6×2)+(4×3)+(0×4)=33 |
| Total cost | 138 — reduction by 52 |

Example of execution cost of fake transactions
in the scheme of one embodiment

FIG.12

Example of data structure of request information  2d

| Item | Example | Meaning |
|------|---------|---------|
| Remittance source ID | E's address | Address of sender in remittance source BC |
| Remittance source BC | BC4 | Identifier of remittance source BC |
| Remittance destination ID | F's address | Address of receiver in remittance destination BC |
| Remittance destination BC | BC2 | Identifier of remittance destination BC |
| Remittance amount | 500 coins | Remittance amount from sender |
| Contact  details | user1@XX.XX.XX | Contact details of sender |

# FIG.13

Start determining process

Obtain privacy parameter k, execution costs $C_1,..,C_N$ of respective BCs, and minimum transaction number $T_{min}$ — S1

Calculate solutions a and b of following simultaneous equations
$$k = (C_1 + \cdots + C_N) \times a + b$$
$$T_{min} = C_N \times a + b$$
— S2

i = 1 — S3

$T_i = C_i \times a + b$ — S4

Round off $T_i$ and record difference $\Delta_i$ — S5

i = N ? — S6
YES

NO
i = i + 1 — S7

$T_1 + ... + T_N = k$ ? — S8
YES

NO
$T_1 + ... + T_N < k$ ? — S9
NO

YES
Increment $T_j = T_j + 1$ until $T_1 + \cdots + T_N = k$ is obtained sequentially from $T_j$ having maximum $\Delta_j$ — S10

Decrement $T_j = T_j - 1$ until $T_1 + \cdots + T_N = k$ is obtained sequentially from $T_j$ having minimum $\Delta j$ — S11

Output transaction numbers $T_1, \cdots, T_{N-1}$ to be generated in respective BCs — S12

END

# FIG.14

Start requesting process

~S21

Obtain genuine transaction information, mixing helper information, and transaction numbers $T_1, \cdots, T_{N-1}$ to be generated in respective BCs

~S22

Select mixing helper from mixing helper information according to transaction numbers $T_1, \cdots, T_{N-1}$

~S23

Mixing helper that satisfies condition exists?

NO

YES

~S25

Request applicant of genuine transaction and mixing helper to execute transaction

~S24

Stand-by until mixing helper information is updated

~S26

Update mixing helper information

END

FIG.15

Example of execution cost of fake transactions
in the second comparative example

| Genuine transaction | Execution cost of fake transactions |
|---|---|
| When generated in BC1 | 19×1=**19** |
| When generated in BC2 | 19×2=38 |

When genuine transaction request is
issued only from BC1, second
comparative example has lower cost

| Genuine transaction | Execution cost of fake transactions |
|---|---|
| When generated in BC1 | (8×1)+(6×2)+(4×3)+(1×4)=**36** |
| When generated in BC2 | (9×1)+(5×2)+(4×3)+(1×4)=35 |

Example of execution cost of fake transactions
in the scheme of one embodiment

# FIG.16

FIG.17

Example of data structure of genuine transaction demanding history

2e

| Item | Example | Meaning |
|---|---|---|
| Date of receipt | 2020.09.02 | Date of receipt of mixing request of genuine transaction |
| Remittance source BC | BC1 | Identifier of remittance source BC |
| Remittance destination BC | BC3 | Identifier of remittance destination BC |

FIG.18

Example of selecting process for generating method of first modification

**Majority determination**

Method that achieves low execution cost

| Second comparative example | Scheme of one embodiment | Scheme of one embodiment |

**Adopt scheme of one embodiment**

Present

Given time period    Given time period    Given time period    Given time period

n× Given time period

# FIG.19

Start selecting process

~S31
Obtain genuine transaction demanding history, information on n given time periods, and privacy parameter k

~S32
MethodA(Second comparative example) = 0
MethodB(One embodiment) = 0

~S33
Allocate previous genuine transactions to n given time periods on the basis of dates of receipt

~S34
i = 1

~S35
Calculate execution cost $C_A$ of fake transaction when method A is adopted in time period i

~S36
Calculate execution cost $C_B$ of fake transaction when method B is adopted in time period i

~S37
$C_A < C_B$ ?
NO / YES

~S38
MethodA = MethodA + 1

~S39
MethodB = MethodB + 1

~S40
i = N ?
NO / YES

~S41
i = i + 1

~S42
MethodA < MethodB ?
NO / YES

~S43
Output [Method A]

~S44
Output [Method B]

END

# FIG.20

```
              ┌─────────────────────────┐
              │ Start requesting process │
              └─────────────────────────┘
                           │
                           ▼              ~S51
  ┌──────────────────────────────────────────────┐
  │         Obtain genuine transaction            │
  │          information, mixing helper           │
  │   information, privacy parameter k,           │
  │        generating method information,         │
  │ transaction numbers T₁,···, T_{N-1} to be     │
  │        generated in respective BCs            │
  └──────────────────────────────────────────────┘
```

Obtain genuine transaction information, mixing helper information, privacy parameter k, generating method information, transaction numbers $T_1, \cdots, T_{N-1}$ to be generated in respective BCs — S51

[Method B]? — S52 — NO

**YES**

Select mixing helper from mixing helper information according to transaction numbers $T_1, \cdots, T_{N-1}$ — S22

Select k-1 mixing helpers having the same remittance source and remittance destination BCs of genuine transaction from mixing helper information — S53

Mixing helper that satisfies condition exists? — S23 — NO

**YES**

Request applicant of genuine transaction and mixing helper to execute transaction — S25

Stand-by until mixing helper information is updated — S24

Update mixing helper information — S26

END

# FIG.21

Connection chain — 12B

Memory unit — 2B

Genuine transaction information — 2a

Mixing helper information — 2b

Generating method information — 2f

Genuine transaction demanding history — 2e

Overall transaction history — 2g

Execution cost information — 2c

Request information — 2d

Transaction number determining unit — 3

Transaction generation requesting unit — 4A

Generating method selecting unit — 7B

CA monitoring unit — 5

Credit transferring unit — 6

Blockchain — 11

13

13

13

1B

FIG.22

Example of data structure of overall transaction history    2g

| Item | Example | Meaning |
|---|---|---|
| Blockchain name | BC1 | |
| Time period | September 2020 | |
| Transaction number | 562,367 | Number of transactions generated on BC having "blcok chain name" during "time period" |

FIG.23

Example of selecting process for generating method of second modification

present

Genuine transaction number

| 1 case | 2 cases | 3 cases | 10 cases |

Overall transaction number

| 100 cases | 200 cases | 300 cases | 1000 cases | 1500 cases |

Check correlation

FIG.24

Example of selecting process for generating method of second modification

Genuine transaction number

present
▽

10 cases          15 cases

Overall transaction number

1000 cases          1000 cases

Predict genuine transaction number of next time period

# FIG.25

```
                    ( Start selecting process )
                                │
                                ▼                              ~S61
    ┌───────────────────────────────────────────────────────────┐
    │ Obtain genuine transaction number demanding history, overall│
    │ transaction history in each BC, privacy parameter k, threshold t│
    │ to determine correlation, time period information, transaction │
    │       numbers T₁, ···T_{N-1} to be generated in respective BCs │
    └───────────────────────────────────────────────────────────┘
```

Obtain genuine transaction number demanding history, overall transaction history in each BC, privacy parameter k, threshold t to determine correlation, time period information, transaction numbers $T_1, \cdots T_{N-1}$ to be generated in respective BCs

**~S62**

$i = 1$

**~S63**

Calculate correlation $t_i$ between overall transaction number of time periods m from m=1 to m=M-1 and genuine transaction number of time period m+1

**~S64**

$t > t_i$ ?  — NO

YES

**~S66**

Set $tr_i$ for genuine transaction number of time period M

**~S65**

Perform regression analysis on overall transaction number of time periods m from m=1 to m=M-1 and genuine transaction number of time period m+1, and predict genuine transaction number $tr_i$ of time period M+1 based on result of regression analysis and overall transaction number of time period M

**~S67**

$i = N$ ?  — YES

NO

**~S68**

$i = i + 1$

**~S69**

Calculate execution cost $C_A$ of fake transaction when Method A is adopoted in time period M+1 on the basis of values from $tr_1$ to $tr_N$

**~S70**

Calculate execution cost $C_B$ of fake transaction when Method B is adopoted in time period M+1 on the basis of values from $tr_1$ to $tr_N$

**~S71**

$C_A < C_B$ ?  — YES

NO

**~S72**

Output [Method A]

**~S73**

Output [Method B]

END

# FIG.26

Computer 10

- Processor 10a
- Storing device 10c
- I/O device 10e
- Memory 10b
- IF device 10d
- Reader 10f
- 10i

Storing device 10c
- Program 10g

10h

## INTERNATIONAL SEARCH REPORT

| International application No. |
| --- |
| PCT/JP2020/042832 |

A. CLASSIFICATION OF SUBJECT MATTER
Int.Cl. G06F9/50(2006.01)i
FI: G06F9/50150Z

According to International Patent Classification (IPC) or to both national classification and IPC

B. FIELDS SEARCHED

Minimum documentation searched (classification system followed by classification symbols)
Int.Cl. G06F9/50

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2019-53712 A (PANASONIC INTELLECTUAL PROPERTY CORPORATION OF AMERICA) 04 April 2019 (2019-04-04), claims | 1-18 |
| A | 宇根正志，暗号資産における取引の追跡困難性と匿名性： 研究動向と課題，金融研究，22 July 2019, vol. 38, no. 3, pp. 127-152, p. 142, l. 6 to p. 144, l. 8, (UNE, Masashi), non-official translation (Difficulty and anonymity of transactions in cryptocurrency: research trends and challenges, Financial Research) | 1-18 |

☐ Further documents are listed in the continuation of Box C.  ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 08 January 2021 | 19 January 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2020/042832 |

| | | | |
|---|---|---|---|
| JP 2019-53712 A | 04 April 2019 | US 2019/0088063 A1 | |
| | | claims | |
| | | CN 109509287 A | |

Form PCT/ISA/210 (patent family annex) (January 2015)

47

**EP 4 250 110 A1**

**REFERENCES CITED IN THE DESCRIPTION**

**Patent documents cited in the description**

- JP 2019053712 A